# EUROPÄISCHE PATENTSCHRIFT

(11) **EP 3 770 419 B1**
(45) Veröffentlichungstag und Bekanntmachung des Hinweises auf die Patenterteilung: **20.04.2022**
(21) Anmeldenummer: 20186900.5
(22) Anmeldetag: 21.07.2020
(51) Int. Cl.: F03C 1/06, E02F 9/22, F04B 1/12, F04B 49/00, F04B 49/06, F04B 17/03, F04B 17/05, F04B 17/06

(54) **HYDRAULISCHE DRUCKMITTELVERSORGUNGSANORDNUNG, VERFAHREN UND MOBILE ARBEITSMASCHINE**
HYDRAULIC COMPRESSED MEDIUM SUPPLY ASSEMBLY, METHOD AND MOBILE WORKING MACHINE
DISPOSITIF D'ALIMENTATION EN MILIEUX DE PRESSION HYDRAULIQUE, PROCÉDÉ ET MACHINE DE TRAVAIL MOBILE

(30) Priorität: 26.07.2019 DE 102019120333; 10.12.2019 DE 102019219206
(43) Veröffentlichungstag der Anmeldung: 27.01.2021
(73) Patentinhaber: Robert Bosch GmbH, 70442 Stuttgart (DE)
(72) Erfinder: Wang, Ximing, 89233 Neu-Ulm (DE); An, Minha, 89264 Weissenhorn (DE); Golde, Marcel, 88471 Laupheim (DE); Brand, Michael, 89075 Ulm (DE); Tetik, Salih, 89278 Nersingen (DE); Geiger, Daniel, 89073 Ulm (DE); Muehlbauer, Florian, 89231 Neu-Ulm (DE)

(56) Entgegenhaltungen:
- EP-A1- 2 851 565
- EP-B1- 2 851 565
- DE-A1-102017 213 118
- DE-T2- 69 132 869
- US-A- 4 510 750
- US-A- 5 947 695

## Beschreibung

### Gebiet der Erfindung

Die Erfindung betrifft eine hydraulische Druckmittelversorgungsanordnung für einen offenen hydraulischen Kreis, beispielsweise für mobile Arbeitsmaschinen, gemäß dem Oberbegriff des Anspruchs 1.

### Hintergrund der Erfindung

Aus dem Dokument RD 30630/04.13 der Firma Rexroth, ist ein Druck- und Förderstrom-Regelsystem bekannt. Dieses dient zur elektrohydraulischen Regelung eines Schwenkwinkels, eines Drucks und einer Leistung einer Axialkolben-Verstellpumpe. Das Regelsystem hat eine Axialkolben-Verstellpumpe mit einem elektrisch angesteuerten Proportionalventil. Über dieses kann ein Stellkolben angesteuert werden. Dieser dient zum Verstellen einer Schrägscheibe der Verstellpumpe. Für den Stellkolben ist ein Wegaufnehmer vorgesehen, über den anhand des Verschiebewegs des Stellkolbens ein Schwenkwinkel der Schrägscheibe bestimmbar ist. Alternativ zum Wegaufnehmer kann auch ein Schwenkwinkel der Schrägscheibe an der Schwenkachse über einen Hall-Sensor abgegriffen werden. Aus dem Schwenkwinkel der Schrägscheibe wiederum kann der Volumenstrom der Verstellpumpe ermittelt werden. Die Verstellpumpe wird über einen Motor angetrieben. Wird die Verstellpumpe nicht angetrieben, und ist das Stellsystem drucklos, dann schwenkt die Verstellpumpe durch eine Federkraft einer Feder auf ein maximales Fördervolumen. Im angetriebenen Zustand der Verstellpumpe und bei stromlosem Pilotventil und verschlossenem Pumpenausgang schwenkt die Verstellpumpe dagegen auf einen Nullhubdruck. Ein Gleichgewicht zwischen Pumpendruck am Stellkolben und Federkraft der Feder stellt sich bei etwa 4 bis 8 bar ein. Die Grundeinstellung wird üblicherweise bei spannungsloser Regelelektronik eingenommen. Eine Steuerung für das Pilotventil weist als Eingangsgröße einen Soll-Druck, einen Soll-Schwenkwinkel und optional einen Soll-Leistungswert auf. Ein Ist-Druck ausgangsseitig der Verstellpumpe wird durch einen Drucksensor erfasst. Wie vorstehend erläutert, wird ein Ist-Schwenkwinkel über den Wegaufnehmer ermittelt. Die aufgenommenen Ist-Werte werden in einer Elektronikeinheit digital verarbeitet und mit den vorgegebenen Sollwerten verglichen. Ein Minimalwertbildner sorgt dann dafür, dass automatisch nur der dem gewünschten Arbeitspunkt zugeordnete Regler aktiv ist. Ein Ausgangssignal des Minimalwertbildners ist dann ein Sollwert für einen Proportionalmagneten am Pilotventil. Zum Steuern des Pilotventils wird ein Verschiebeweg eines Ventilschiebers des Pilotventils über einen Wegaufnehmer erfasst und der Steuerung gemeldet. In dem Dokument RD 30242/03.10 der Firma Rexroth ist eine externe Ansteuerelektronik für die beschriebene Verstellung der Axialkolben-Verstellmaschine offenbart. Des Weiteren ist in dem Dokument RD 92 088/08.04 der Firma Rexroth ein elektro-hydraulisches Regelsystem offenbart.

Aus der EP 1 460 505 A2 ist eine ablösende Regelung eines Drucks und eines Förderstroms offenbart. Hierbei ist eine verschwenkbare hydraulische Axialkolben-Verstellmaschine vorgesehen, die über eine Triebwelle mit einer weiteren Hydromaschine verbunden ist. Des Weiteren ist ein Regelkreis für ein Antriebsdrehmoment der Verstellmaschine vorgesehen. Dem Regelkreis wird ein Ist-Antriebsdrehmoment und ein Soll-Antriebsdrehmoment zugeführt, woraus eine Stellgröße für eine Stelleinrichtung der Verstellmaschine ermittelt wird. Das Soll-Antriebsdrehmoment wiederum ist eine Ausgangsgröße eines Minimalwertbildners. Dieser wählt hierbei eine Ausgangsgröße einer Druckregelung und einer Volumenstromregelung aus. Als Ist-Volumenstrom ist hierbei der Volumenstrom der mit der Verstellmaschine verbundenen Hydromaschine vorgesehen. Des Weiteren ist als Ist-Druck ein Hochdruck dieser Hydromaschine vorgesehen.

Des Weiteren ist in den Dokumenten EP 2 851 565 B1, JP 4 801 247, JP 5 182 908, EP 034 9092 B1, US 5/267,441, US 5/967,756 und US 5/170,625 jeweils eine Hydromaschine mit einem Schwenkwinkelsensor und einem Drucksensor offenbart. Es können der Druck, der Volumenstrom und die Leistung gesteuert werden.

Die Dokumente US 5 947 695 A und DE 691 32 869 T2 offenbaren

Druckmittelversorgungsanordnungen, bei denen die Dynamik der Schrägscheibe einer hydraulischen Maschine gesteuert wird. Diese Dokumente offenbaren jedoch keine Steueranordnung, welche die in Anspruch 1 definierten hydraulischen Parameter verwendet.

Aus dem Stand der Technik sind außerdem Lastdruck-unabhängige-durchflussverteilungs(LUDV)-Systeme bekannt. Bei einem LUDV-System oder LUDV-Steuerung handelt es sich um einen Sonderfall einer Load-Sensing(LS)-Steuerung, bei der der höchste Lastdruck an eine Verstellpumpe gemeldet und diese so geregelt wird, dass in der Pumpenleitung ein um eine bestimmte Druckdifferenz δp über dem Lastdruck liegender Pumpendruck herrscht. Verstellbaren Zumessblenden einer LS-Steuerung sind Individualdruckwaagen zugeordnet, die auch über die Zumessblenden der jeweils lastdruck-niedrigeren hydraulischen Verbraucher eine konstante Druckdifferenz aufrechterhalten. Bei einer üblicherweise mit LS-Steuerung bezeichneten Steueranordnung sind die Individualdruckwaagen stromauf der Zumessblenden angeordnet und drosseln zwischen der Pumpenleitung und den Zumessblenden den Fluidstrom so stark an, dass der Druck vor den Zumessblenden unabhängig vom Pumpendruck nur noch um eine bestimmte Druckdifferenz über dem individuellen Lastdruck liegt. Hier wird bei Unterversorgung der lastdruck-höchste Verbraucher langsamer, weil der vor dessen Zumessblende anstehende Pumpendruck abfällt und damit die Druckdifferenz über diese Zumessblende kleiner wird. Bei der LUDV-Steuerung sind die Individualdruckwaagen stromab der Zumessblenden angeordnet und drosseln zwischen den Zumessblenden und der Last den Fluidstrom so stark an, dass der Druck nach allen Zumessblenden gleich, vorzugsweise gleich dem höchsten Lastdruck ist oder leicht über diesem liegt. Hier ändert sich bei Unterversorgung an dem Druck stromab der Zumessblenden nichts. Vor allen Zumessblenden steht in gleicher Weise der Pumpendruck an, sodass sich an allen Zumessblenden die Druckdifferenz in gleicher Weise ändert, wenn bei einer Unterversorgung der Pumpendruck kleiner wird, und die Stromaufteilung zwischen den Zumessblenden erhalten bleibt.

Bei der beschriebenen Steuerung erfolgt die Regelung der Verstellpumpe über einen hydromechanischen Pumpenregler (Differentialdruckregelung (DFR)). Die Druckdifferenz δp oder der Differentialdruck wird über eine Federvorspannung am Pumpenregler voreingestellt. Sobald der Pumpendruck unterhalb des eingestellten Differentialdrucks ist, wird eine Steuerkante an einem Ventilschieber am Pumpenregler derart geöffnet, sodass sich das Hubvolumen der Verstellpumpe erhöht. Wenn der Differentialdruck erreicht ist, erreicht der Pumpenregler seine Regelposition, sodass ein Hubvolumen der Verstellpumpe in einem stationären Zustand gehalten wird. Ist der Pumpendruck größer als der eingestellte Differentialdruck, so wird das Hubvolumen der Verstellpumpe entsprechend verkleinert, bis ein Soll-Pumpendruck erreicht ist. Ein verstellbarer Differentialdruck kann ermöglicht sein, indem ein elektrohydraulischer Pumpenregler eingesetzt wird.

Zusätzlich zu der Funktion der Differentialdruckregelung kann es notwendig sein, die Verstellpumpe in ihrer Leistung zu limitieren, da eine Eckleistung der Verstellpumpe in der Regel größer ist als eine verfügbare Antriebsleistung einer Antriebseinheit, wie beispielsweise einem Elektromotor oder einer Verbrennungskraftmaschine, wie beispielsweise ein Dieselmotor. Dies wird üblicherweise mit einer zusätzlichen Komponente erreicht. Ein überlagerter elektronischer oder mechanischer Regelkreis limitiert einen Schwenkwinkel oder ein Hubvolumen der Verstellpumpe abhängig vom Druckniveau, sodass ein maximales Drehmoment nicht überschritten wird beziehungsweise eine Leistung konstant bleibt. Dies ist beispielsweise in der DE 10 2010 0200 04 offenbart.

Ein dynamisches Verhalten des oben beschriebenen Systems ist nur in begrenztem Maß variabel verstellbar. Insbesondere eine Dynamik der Verstellpumpe erfolgt durch Einstellung von Düsen und Federsteifigkeiten am Pumpenregler und ist festgelegt und nicht mehr veränderbar für den Betrieb in einer Druckmittelversorgungsanordnung. Des Weiteren ist eine Dynamik der Verstellpumpe abhängig vom Pumpendruck. Einflussgrößen, die eine Systemdynamik definieren, sind insbesondere Drehzahl, Pumpendruck, Temperatur des Druckmittels, ein Druckmittelvolumen in den hydraulischen Leitungen, eine Steifigkeit der Verschlauchung/Verrohrung, eine Kinematik einer Arbeitsausrüstung, ein Soll-Differentialdruck und externe Störkräfte. Die Verstellpumpe muss in allen Situationen die höchste Dynamik und Stabilität gewährleisten. Es ist daher ein Kompromiss in der Auslegung der Verstellpumpe notwendig. In einer Arbeitsmaschine wird das beschriebene System schnell schwingungsanfällig, da unterschiedliche Verbraucher, wie beispielsweise Hydrozylinder oder Hydromaschinen, unterschiedliche Systemreaktionen aufweisen. Dies kann dazu führen, dass Bewegungen von Verbrauchern als ruckartig empfunden werden, da die Verstellpumpe nicht in allen Situationen eine optimale Dynamik besitzt. Demgegenüber liegt der Erfindung die Aufgabe zugrunde, eine hydraulische Druckmittelversorgungsanordnung zu schaffen, die vorrichtungstechnisch einfach und kostengünstig ausgestaltet ist und eine vergleichsweise hohe Dynamik und Stabilität aufweist. Außerdem ist es die Aufgabe der Erfindung, eine mobile Arbeitsmaschine mit einer Druckmittelversorgungsanordnung zu schaffen.

Die Aufgabe hinsichtlich der Druckmittelversorgungsanordnung wird gelöst gemäß dem Merkmal des Anspruchs 1 und hinsichtlich der mobilen Arbeitsmaschine gemäß den Merkmalen des Anspruchs 8.

Vorteilhafte Weiterbildungen der Erfindung sind Gegenstand der Unteransprüche. Erfindungsgemäß ist eine hydraulische Druckmittelversorgungsanordnung für einen offenen hydraulischen Kreis, insbesondere für mobile Arbeitsmaschinen, vorgesehen. Diese hat eine Hydromaschine, insbesondere eine Verstellpumpe, zur Druckmittelversorgung von zumindest einem hydraulischen Verbraucher. Des Weiteren kann die Druckmittelversorgungsanordnung einen hydraulischen Steuerblock haben, der ein oder mehrere Ventil/e oder Ventilscheibe/n aufweist. Dieser dient zum Steuern des zumindest einen Verbrauchers. Die Hydromaschine ist vorzugsweise an den Steuerblock angeschlossen. Des Weiteren kann die Druckmittelversorgungsanordnung ein erstes und zweites Steuerungsmodul aufweisen. Über das erste Steuerungsmodul kann der Steuerblock über zumindest ein Stellsignal oder über Stellsignale steuerbar sein. Zwischen den Steuerungsmodulen ist vorteilhafterweise eine Datenschnittstelle vorgesehen. Beispielsweise weisen die Steuerungsmodule hierfür eine gemeinsame Datenleitung auf, an die sie angeschlossen sind. Vorzugsweise ist vorgesehen, dass das erste Steuerungsmodul als weiteres Stellsignal einen Soll-Ausgangsdruck, der beispielsweise ausgangsseitig der Hydromaschine abgegriffen ist, oder einen Pumpendruck für die Hydromaschine und/oder ein Soll-Fördervolumen oder einen Soll-Schwenkwinkel für die Hydromaschine und/oder ein Soll-Drehmoment für die Hydromaschine dem zweiten Steuerungsmodul als Eingangsgröße/n über die Datenschnittstelle bereitstellt. Das zweite Steuerungsmodul kann dann vorzugsweise anhand des Soll-Ausgangsdrucks und/oder des Soll-Fördervolumens und/oder des Soll-Drehmoments einen Verstellmechanismus oder eine Verstellung der Hydromaschine mit einem Ventilstellsignal steuern. Mit Vorteil ist vorgesehen, dass über die Datenschnittstelle zumindest ein hydraulischer Parameter und/oder ein weiteres Stellsignal an das zweite Steuerungsmodul, insbesondere vom ersten Steuerungsmodul, übertragen ist. Der hydraulische Parameter und/oder das weitere Stellsignal ist dabei derart ausgestaltet, dass es eine Dynamik des Verstellmechanismus der Hydromaschine vorgibt und/oder limitiert. Bei dem Parameter handelt es sich beispielsweise um einen maximalen Gradienten oder um eine maximale Änderungsrate für den Ist-Ausgangsdruck und/oder für das Ist-Fördervolumen und/oder für eine Ist-Leistung und/oder für ein Ist-Drehmoment.

Diese Lösung hat den Vorteil, dass durch die Druckmittelversorgungsanordnung auf einfache Weise eine Dynamik der Hydromaschine verstellbar ist. Die Einstellung der Dynamik erfolgt dann über den hydraulischen Parameter und/oder über das weitere Stellsignal. Es ist somit vorteilhaft, dass übliche, sonst notwendige hydromechanische Dämpfungsmaßnahmen für den Anwender oder Maschinenhersteller einfach konfigurierbar und parametrierbar in der Dynamik-Limitierung der Steuerung der Hydromaschine realisiert sind.

Ein Systemverhalten der Druckmittelversorgungsanordnung, insbesondere ein Schwingungsverhalten, ein Steuerungsverhalten, ein Fahreindruck beim Einsatz in einer mobilen Arbeitsmaschine, ändert sich maßgeblich mit der Dynamik der Hydromaschine. Da diese über den hydraulischen Parameter und/oder über das weitere Stellsignal explizit vorgebbar und einstellbar ist, kann das Verhalten einer gesamten Druckmittelversorgungsanordnung beispielsweise gutmütiger sein und besser angepasst werden.

Mit Vorteil ist als Parameter ein maximaler Gradient oder eine maximale Änderungsrate einer oder mehrerer Ist-Größen der Druckmittelversorgungsanordnung vorgesehen. Somit kann unmittelbar auf die Dynamik der Druckmittelversorgungsanordnung Einfluss genommen werden, indem der Gradient einer oder mehrerer Ist-Größen bei der Steuerung berücksichtigt ist.

Erfindungsgemäß ist als Parameter eine maximale Fördervolumen-Verstellgeschwindigkeit der Hydromaschine und/oder ein maximaler Druckgradient für den Ist-Ausgangsdruck der Hydromaschine und/oder ein maximaler Soll-Differentialdruck für die Hydromaschine und/oder ein maximaler Gradient des Ist-Drehmoments der Hydromaschine.

In weiterer Ausgestaltung der Erfindung kann alternativ oder zusätzlich zum Soll-Ausgangsdruck und/oder zum Soll-Fördervolumen als Stellsignal oder Eingangsgröße für das zweite Steuerungsmodul ein Soll-Drehmoment über die Datenschnittstelle, insbesondere vom ersten Steuerungsmodul, zugeführt sein. Somit kann die Hydromaschine auf einfache Weise auch in Abhängigkeit des Soll-Drehmoments und/oder einer Soll-Leistung gesteuert werden.

In weiterer Ausgestaltung der Erfindung ist der zumindest eine hydraulische Parameter oder sind ein Teil der Parameter oder alle Parameter, wie vorstehend bereits angeführt, verstellbar, um beispielsweise auch während des Betriebs der Druckmittelversorgungsanordnung Einfluss auf die Dynamik zu nehmen. Die Anpassung der Parameter oder des Parameters erfolgt vorzugsweise in Abhängigkeit von Zustandsgrößen der Druckmittelversorgungsanordnung und/oder in Abhängigkeit einer Vorgabe eines Bedieners. Als Zustandsgröße kann beispielsweise eine Temperatur eines Druckmittels angesehen werden. Hierbei kann es sich beispielsweise um das Druckmittel ausgangsseitig oder am Ausgang der Hydromaschine handeln. Alternativ oder zusätzlich kann vorgesehen sein, dass eine Einstellung oder Anpassung in Abhängigkeit einer Ist-Drehzahl der Hydromaschine oder in Abhängigkeit von einem Ist-Ausgangsdruck der Hydromaschine und/oder in Abhängigkeit von einem Ist-Fördervolumen und/oder Ist-Schwenkwinkel der Hydromaschine erfolgt. Durch die Verstellung des oder der Parameter/s basierend auf einer oder mehreren Ist-Größen kann auf einfache Weise die Dynamik der Druckmittelversorgungsanordnung mit einer hohen Genauigkeit angepasst werden.

Weiterhin ist vorteilhaft, dass mit dem zumindest einen hydraulischen Parameter zum einen die Dynamik und zum anderen beispielsweise auch Soll-Größen für die Regelung der Hydromaschine angepasst werden können. Dies erfolgt beispielsweise in Abhängigkeit eines Arbeitspunktes der Hydromaschine, also beispielsweise in Abhängigkeit eines Ist-Volumenstroms oder eines Ist-Ausgangsdrucks. Alternativ oder zusätzlich kann dies auch in Abhängigkeit von einer Last von Verbrauchern und/oder von Soll-Größen, wie beispielsweise einem Druckgradienten, einem Lastdruck oder einem Winkelgradienten abhängen, um Schwingungen zu reduzieren und eine Bewegungsqualität zu verbessern. Die Ermittlung dieser Zustände erfolgt vorzugsweise auf einem elektronischen Weg. Insgesamt kann durch die erfindungsgemäße hydraulische Druckmittelversorgungsanordnung ein verbesserter Wirkungsgrad erreicht werden. Außerdem ist eine einfachere Integration beispielsweise in eine mobile Arbeitsmaschine ermöglicht und es sind im Vergleich zum Stand der Technik weniger Komponenten notwendig. Mit anderen Worten ist es äußerst vorteilhaft, die Dynamik der Hydromaschine auf den jeweiligen Betriebszustand anzupassen, um insgesamt eine maximale Dynamik bei einer maximalen Stabilität zu erreichen. Durch den zumindest einen hydraulischen Parameter kann die Dynamik der Hydromaschine elektronisch beherrscht werden. Aus diesem Grund sind Komponenten, wie beispielsweise Dämpfungsdüsen oder Dämpfungsschläuche, Ventile zum Übersteuern oder hydromechanische Elemente im System, wie beispielsweise Druckteilerschaltungen in Drehwerken, nicht mehr notwendig, um die Dynamik zu beeinflussen.

Bei einer bevorzugten Ausgestaltung der Erfindung ist der Parameter oder sind die Parameter in Abhängigkeit von dem oder den über die hydraulische Druckmittelversorgungsanordnung angesteuerten Verbraucher/n verstellbar. Insbesondere erfolgt die Verstellung auf Basis des oder der bewegten Verbraucher/s. Somit kann mit dem zumindest einen Parameter noch besser Einfluss auf die Dynamik genommen werden.

Bevorzugter Weise ist der Parameter in Form des maximalen Druckgradienten abhängig von einer Ist-Drehzahl und/oder abhängig von einem verfügbaren Drehmomentgradienten für das Ist-Drehmoment einer die Hydromaschine antreibenden Antriebseinheit. Bei der Antriebseinheit handelt es sich beispielsweise um einen Verbrennungsmotor, insbesondere um einen Dieselmotor, oder um einen Elektromotor.

Vorzugsweise erfolgt eine Anpassung des Parameters in Form des maximalen Soll-Differentialdrucks derart, dass ein maximaler Soll-Differentialdruck in einem Normalbetrieb vorgesehen ist und/oder ein, insbesondere kleinerer, maximaler Soll-Differentialdruck in einem Feinsteuerbereich eines Verbrauchers und/oder ein, insbesondere größerer, maximaler Soll-Differentialdruck in einem aggressiven oder schnellen oder groben Steuerbereich eines Verbrauchers. Alternativ oder zusätzlich ist denkbar, dass eine Anpassung des Parameters in Form des Soll-Differentialdrucks in Abhängigkeit vom Typ des Verbrennungsmotors, beispielsweise vom Typ des Dieselmotors, und/oder in Abhängigkeit vom verfügbaren Ist-Drehmoment der Antriebseinheit vorgesehen ist. Alternativ oder zusätzlich ist denkbar eine Anpassung des Parameters in Form des Soll-Differentialdrucks in Abhängigkeit von einem "Bucket Shake" und/oder in Abhängigkeit von einem Fahrbetrieb einer die Druckmittelversorgungsanordnung aufweisenden mobilen Arbeitsmaschine erfolgt. Das heißt beispielsweise, dass eine Anpassung dann erfolgt, wenn ein Fahren der mobilen Arbeitsmaschine detektiert wird. Beim Bucket Shake erfolgt ein schnelles hin und her Bewegen eines Joysticks für den Löffelzylinder, um Material aus dem Löffel herauszuschütteln. Eine Pumpendynamik sollte hierbei besonders hoch sein, damit der Löffel gut geschüttelt werden kann.

In weiterer Ausgestaltung der Erfindung kann eine Anpassung des Parameters in Form des maximalen Soll-Drehmoments und/oder in Form des maximalen Soll-Differentialdrucks in Abhängigkeit von einem Batterieladezustand einer Batterie einer Antriebseinheit für die Hydromaschine in Form einer elektrischen Maschine, insbesondere in Form eines Elektromotors erfolgen. Alternativ oder zusätzlich kann vorgesehen sein, dass eine Anpassung des maximalen Soll-Drehmoments in Abhängigkeit von einem Typ der elektrischen Maschine und/oder in Abhängigkeit von einer Temperatur der Batterie erfolgt.

Vorzugsweise ist der Parameter in Form des maximalen Druckgradienten und/oder in Form der maximalen Fördervolumen-Verstellgeschwindigkeit abhängig von dem oder den über die hydraulische Druckmittelversorgungsanordnung angesteuerten Verbraucher/n.

Über den Parameter in Form des maximalen Differentialdrucks oder Soll-Differentialdrucks oder Druckgradienten kann beispielsweise beim Fahren der mobilen Arbeitsmaschine, die die Druckmittelversorgungsanordnung einsetzt, eine Geschwindigkeitssteuerung der mobilen Arbeitsmaschine erfolgen. Die mobile Arbeitsmaschine wird hier beispielsweise über einen hydraulischen Antrieb, der von der Druckmittelversorgungsanordnung versorgt wird, angetrieben. Somit kann ein Fahren im offenen hydraulischen Kreis mit einer Geschwindigkeitsbegrenzung auf einfache Weise umgesetzt werden.

Denkbar ist auch, den Parameter in Form des maximalen Druckgradienten oder maximalen Drehmoments oder maximalen Gradienten des Ist-Drehmoments in Abhängigkeit von einer Dieseldrückung und/oder von einem Drehzahleinbruch des Dieselmotors anzupassen.

In weiterer Ausgestaltung der Erfindung kann der Parameter in Form der maximalen Fördervolumen in Abhängigkeit von einem Bedienerwunsch sein, also beispielsweise von einem Bediener verstellbar sein. Hierdurch kann auf einfache Weise eine Maximalgeschwindigkeit einer Bewegung des Verbrauchers oder der Verbraucher wunschgemäß begrenzt sein.

Vorzugsweise ist ein Verbraucher oder sind mehrere Verbraucher in Form von Hydrozylindern vorgesehen. Der Hydrozylinder kann hier beispielsweise einen Kolben haben, der mit einer Kolbenstange verbunden ist und zumindest einen Druckraum begrenzt. Durch die erfindungsgemäße Druckmittelversorgungsanordnung kann eine Dynamik des Verbrauchers gesteuert werden, insbesondere über eine Limitierung des Pumpen Ist-Druckgradienten. Es ist beispielsweise denkbar, dass der Kolben in Richtung einer Verkleinerung des Druckraums, insbesondere am Ende seines Verschiebewegs, durch die Steuerung abgebremst wird, um einen Anschlag ans Zylindergehäuse zu vermeiden oder zumindest eine Anschlagsgeschwindigkeit zu senken. Hierdurch können große Druckspitzen vermieden werden. Dies kann als elektronisches Endlagendämpfung bezeichnet sein. Dagegen sind im Stand der Technik hierfür aufwändige vorrichtungstechnische Maßnahmen notwendig.

In weiterer Ausgestaltung der Erfindung ist denkbar, die Pumpendynamik oder die Parameter in Abhängigkeit von einer Arbeitsfunktion der mobilen Arbeitsmaschine anzupassen. Wird die mobile Arbeitsmaschine, beispielsweise in Form eines Baggers, für Leistungsbaggern eingesetzt, so weist sie dann eine andere Pumpendynamik auf, als bei Handlingsarbeiten.

Mit Vorteil können Schwingungen der Druckmittelversorgungsanordnung über entsprechende Mittel detektiert werden und/oder berechnet werden, wobei dann der Parameter oder die Parameter in Abhängigkeit davon angepasst sind.

Bei einer bevorzugten Lösung ist denkbar, dass eine Anpassung des oder der Parameter/s in Abhängigkeit von einem hinterlegten Streckenmodell erfolgt. Bei einem Streckenmodell handelt es sich beispielsweise um die Strecke der mobilen Arbeitsmaschine, die die Druckmittelversorgungsanordnung aufweist. Bei der Strecke kann beispielsweise der Typ der mobilen Arbeitsmaschine, wie beispielsweise ein Bagger, dessen Kinematik, hydraulische Kapazitäten der hydraulischen Komponenten, Trägheiten der Verbraucher, Übersetzungen usw. berücksichtigt sein. Es ist denkbar, für unterschiedliche Hardwarekonfigurationen unterschiedliche Streckenmodelle vorzusehen.

Bei einem bevorzugten Ausführungsbeispiel der Erfindung kann eine Anpassung des Parameters, insbesondere in Form des maximalen Soll-Ausgangsdrucks, abhängig von einer Auslenkung eines oder mehrerer Bedienelemente, wie beispielsweise eines Joysticks, sein. Hierdurch kann auf einfache Weise eine Kraftfühligkeit für einen Bediener umgesetzt werden. Bei kleinen Bedienvorgaben beginnt beispielsweise die Bewegung des Verbrauchers nur dann, wenn ein Lastdruck unterhalb der bedienelementabhängigen Obergrenze ist.

In weiterer Ausgestaltung der Erfindung ist denkbar, dass verschiedene Betriebsmodi einstellbar sind. Bei einem jeweiligen Betriebsmodus kann dann zumindest ein voreingestellter Parameter und/oder ein voreingestelltes Stellsignal für die Dynamik der Verstellung der Hydromaschine vorgesehen sein. Die Betriebsmodi können sich dann hinsichtlich ihres Wertes ihres zumindest einen Parameters und/oder hinsichtlich des Wertes ihres zumindest einen Stellsignals voneinander unterscheiden. Somit sind verschiedene Betriebsmodi einstellbar, beispielsweise ein Dynamik-Modus oder ein Feinsteuer-Modus, bei denen die unterschiedliche Parameter hinsichtlich der Dynamik der Hydromaschine voreingestellt sind.

Als Betriebsmodus kann beispielsweise vorgesehen sein, dass eine Anpassung des, insbesondere maximalen, Druckgradienten und/oder des, insbesondere maximalen, Schwenkwinkelgradienten und/oder des, insbesondere maximalen, Winkelgradienten in Abhängigkeit von dem Verbraucher, der bewegt wird, erfolgt. Alternativ oder zusätzlich kann als Betriebsmodus vorgesehen sein, dass eine Anpassung des Maximalen Drucks und/oder des maximalen Soll-Ausgangsdrucks oder des maximalen Ist-Ausgangsdrucks in Abhängigkeit von einer Auslenkung eines Bedienelements oder mehrere Bedienelemente, wie beispielsweise eines oder mehrerer Joysticks ist. Alternativ oder zusätzlich kann als Betriebsmodus vorgesehen sein, das eine Anpassung eines Parameters erfolgt, wenn eine bestimmte Betriebs- oder Ansteuersituation detektiert wird, wie beispielsweise den Parameter delta p oder den Soll-Differentialdruck, wenn ein Bucket shake detektiert wird. Alternativ oder zusätzlich kann als Betriebsmodus vorgesehen sein, dass eine Anpassung des Drehmomentlimits und/oder des maximalen Soll-Drehmoments und/oder des maximalen Ist-Drehmoments in Abhängigkeit von einem Betriebszustand eines Elektroantriebs, wie beispielsweise einer Batterieladung und/oder einer E-Motor-Temperatur und/oder Batterietemperatur, erfolgt. Der Elektroantrieb ist beispielsweise ein Teil der untenstehend angeführten mobilen Arbeitsmaschine.

Vorzugsweise weist der Verstellmechanismus einen Stellzylinder mit einem Stellkolben zum Verstellen des Fördervolumens der Hydromaschine und ein elektrisch proportional ansteuerbares Pilotventil auf. Über das Pilotventil kann dann beispielsweise ein Zufluss und/oder ein Abfluss in einem vom Stellkolben begrenzten Steuerraum des Stellzylinders steuerbar sein. Hierdurch kann der Stellkolben zum Ansteuern mit Druckmittel beaufschlagt werden.

In weiterer Ausgestaltung der Erfindung kann zumindest ein Filter für zumindest eine Eingangsgröße oder ein jeweiliger Filter für einen Teil der Eingangsgrößen oder für alle Eingangsgrößen im zweiten Steuerungsmodul vorgesehen sein. Vorzugsweise kann eine gefilterte Eingangsgröße oder ein Teil der gefilterten Eingangsgrößen oder alle gefilterten Eingangsgrößen an das erste Steuerungsmodul übermittelt sein. Somit kann eine Ausgabe von gefilterten, stabilen Ist-Größen an die übergeordnete Steuerung oder das erste Steuerungsmodul erfolgen.

Als Ausgangsgröße des zweiten Steuerungsmoduls ist vorzugsweise eine Stellgröße für das Pilotventil vorgesehen. Es ist denkbar, dass das zweite Steuerungsmodul einen ersten Regelkreis für den Ist-Ausgangsdruck der Hydromaschine hat. Dieser wird vorzugsweise zwischen einem Hochdruckanschluss der Hydromaschine und dem Steuerblock abgegriffen. Alternativ oder zusätzlich kann der erste Regelkreis für das Ist-Fördervolumen der Hydromaschine vorgesehen sein.

Handelt es sich bei der Hydromaschine um eine Axialkolbenmaschine mit einer verstellbaren Schwenkwiege oder Schrägscheibe zum Einstellen eines Fördervolumens, so kann beispielsweise das Ist-Fördervolumen über ein entsprechendes Mittel, beispielsweise über einen Schwenkwinkelsensor, wie beispielsweise einen Wegaufnehmer für den Stellkolben, erfasst werden. Alternativ zum Wegaufnehmer kann auch ein Schwenkwinkel der Schrägscheibe an der Schwenkachse über einen Hall-Sensor abgegriffen werden. Mit anderen Worten ist ein Messmittel zur Erfassung der Verdrängungsposition oder des Verdrängungsvolumens vorgesehen. Denkbar wäre auch den Schwenkwinkel über ein Drehmoment der Antriebswelle oder über eine Druckmessung zu ermitteln. Vorzugsweise ist dem ersten Regelkreis ein zweiter Regelkreis unterlagert, der für eine Fördervolumen-Verstellgeschwindigkeit vorgesehen sein kann. Als Eingangsgröße für den zweiten Regelkreis ist vorzugsweise eine Ist-Fördervolumen-Verstellgeschwindigkeit, insbesondere als Ableitung des Ist-Fördervolumens, der Hydromaschine vorgesehen. Wird die Ist-Fördervolumen-Verstellgeschwindigkeit über das Ist-Fördervolumen ermittelt, so kann das erfasste Ist-Fördervolumen vorteilhafterweise sowohl für den ersten als auch für den zweiten Regelkreis verwendet werden, womit eine separate Erfassung der Ist-Fördervolumen-Verstellgeschwindigkeit nicht notwendig ist. Eine Ausgangsgröße des zweiten Regelkreises ist vorzugsweise die Stellgröße für das Pilotventil. Vorteilhafterweise kann dem zweiten Regelkreis ein Stellwert aus dem ersten Regelkreis in Form einer Fördervolumen-Verstellgeschwindigkeit zugeführt sein. Bei dem Stellwert aus dem ersten Regelkreis kann es sich dann um eine Soll-Größe für den zweiten Regelkreis handeln.

Der erste Regelkreis der Steuerung kann des Weiteren für ein Ist-Drehmoment der Hydromaschine ausgebildet sein. Als Eingangsgröße für die Steuerung ist dann beispielsweise ein Soll-Drehmoment und ein Ist-Drehmoment vorgesehen. Alternativ oder zusätzlich ist denkbar, dass der erste Regelkreis der Steuerung für eine Ist-Leistung unter Einbeziehung einer Ist-Drehzahl der Hydromaschine ausgebildet ist. Denkbar ist auch, dass aus der Ist-Drehzahl über eine Kennlinie die Ist-Leistung oder das Ist-Drehmoment ermittelbar ist, um dann die Ist-Leistung zu regeln. Zum Regeln des Ist-Drehmoments kann ein Regler, insbesondere ein P-Regler vorgesehen sein. Alternativ ist denkbar, den Regler als PI-Regler oder als PID-Regler auszubilden.

In weiterer Ausgestaltung der Erfindung weist der erste Regelkreis für den Ist-Ausgangsdruck der Hydromaschine und/oder für das Ist-Fördervolumen der Hydromaschine und/oder für das Ist-Drehmoment der Hydromaschine jeweils eine Stellgröße auf. Die Steuerung kann dann eine ablösende Regelung vorsehen, die einen Minimalwertbildner für die ausgegebenen Stellgrößen des ersten Regelkreises hat. Eine Ausgangsgröße des Minimalwertbildners ist dann vorzugsweise der Stellwert in Form der Fördervolumen-Verstellgeschwindigkeit, der dem zweiten Regelkreis zugeführt wird. Der Minimalwertbildner sorgt dafür, dass automatisch nur der dem gewünschten Arbeitspunkt zugeordnete Regler aktiv ist. Beispielsweise wählt der Minimalwertbildner die kleinste der zugeführten Stellgrößen aus und führt diese dann dem untergelagerten zweiten Regelkreis als Soll-Fördervolumen-Verstellgeschwindigkeit zu.

Für das Fördervolumen oder den Schwenkwinkel - aus dem das Fördervolumen bestimmbar ist - der Hydromaschine hat der erste Regelkreis vorzugsweise einen Regler. Bei diesem handelt es sich beispielsweise vorzugsweise um einen P-Regler. Alternativ kann dieser als PI-Regler oder als PID-Regler ausgebildet sein. Der Regler kann als Eingangsgröße einen Soll-Schwenkwinkel und einen Ist-Schwenkwinkel oder ein Soll-Fördervolumen oder Ist-Fördervolumen aufweisen.

Vorzugsweise ist für den Ist-Schwenkwinkel ein Filter, beispielsweise in Form eines PT1-Glieds oder ein Filter höherer Ordnung, vorgesehen. Durch den Filter kann auf einfache Weise eine Beruhigung des Signals erfolgen.

Vorzugsweise weist der erste Regelkreis einen Regler für den Ist-Ausgangsdruck der Hydromaschine auf. Als Eingangsgröße ist diesem der, insbesondere über einen Drucksensor erfasste, Ist-Ausgangsdruck und der Soll-Ausgangsdruck zugeführt. Als Regler ist vorzugsweise ein PID-Regler vorgesehen. Alternativ kann ein P-Regler oder PI-Regler eingesetzt sein. Der Soll-Ausgangsdruck der Hydromaschine ist vorzugsweise verstellbar. Insbesondere wird zum Ermittlung des Soll-Ausgangsdrucks ein Ist-Load-Sensing(LS)-Druck der Verbraucher, die über die Druckmittelversorgungsanordnung mit Druckmittel versorgt sind, erfasst. Insbesondere handelt es sich bei dem Ist-LS-Druck um den höchsten Ist-Lastdruck der Verbraucher. Der Ist-LS-Druck wird vorzugsweise der Steuerung bzw. dem Regler für den Ist-Ausgangsdruck als Eingangsgröße zugeführt. Bei einer Load-Sensing(LS)-Steuerung soll der höchste Lastdruck der Verstellpumpe gemeldet werden und die Verstellpumpe soll so geregelt werden, dass in der Pumpenleitung ein um eine bestimmte Druckdifferenz (delta_p) über dem höchsten Ist-Lastdruck liegender Ist-Ausgangsdruck herrscht. Somit ist vorteilhafter Weise vorgesehen, dass dem Regler für den Ist-Ausgangsdruck zusätzlich ein Soll-Differentialdruck als Eingangsgröße zugeführt wird. Der Soll-Ausgangsdruck kann dann durch Addition des Ist-LS-Drucks und des Soll-Differentialdrucks berechnet werden und dem Regler als Eingangsgröße dienen. Der Soll-Differentialdruck kann entweder fest parametriert sein oder flexibel als Parameter verstellbar und vorgegeben werden.

Insbesondere ist es auch denkbar, mehrere Ist-LS-Drücke zu erfassen und eine Maximalwertbildung oder eine Priorisierung in der Steuerung vorzunehmen. Dies kann durch Rückmeldung an ein Hauptventil oder an ein Main-Control-Valve erfolgen, wenn beispielsweise eine Fördermenge der Hydromaschine (Pumpe) begrenzt ist und damit die durch das Hauptventil geführte Fördermenge begrenzt werden kann, wodurch beispielsweise eine Priorisierung einer hydraulischen Lenkung im Falle einer Unterversorgung ermöglicht ist. Dabei wird vorteilhaft die Hydromaschine (Pumpe) zusätzlich zur LS-Druckführung auf eine Mindestmenge eingestellt, um auch im Falle einer Drucksensor-Fehlinformation die Lenkfähigkeit sicherzustellen.

Bei einem Regler für den Ist-Ausgangsdruck und/oder für den Ist-Fördervolumen und/oder für das Ist-Drehmoment kann ein I-Anteil vorgesehen sein, wie beispielsweise bei einem PID-Regler, was obenstehend erläutert ist. Es kann dann, insbesondere beim Einsatz des Minimalwertbildners, vorgesehen sein, dass bei dem Regler oder den Regler/n, die nicht-aktiv sind und einen I-Anteil haben, der I-Anteil eingefroren oder, insbesondere teilweise oder vollständig zurückgesetzt wird. Ist der Regler dann aktiv, so wird der I-Anteil auf übliche Weise genutzt. Dies führt dazu, dass der I-Anteil des oder der Regler/s bei Inaktivität nicht aufgezogen wird. Diese Ausgestaltung kann als "Anti-windup" bezeichnet werden.

Für den Regler des Ist-Ausgangsdrucks können vorteilhafter Weise ein oder mehrere Filter mit einem druckabhängigen Filterkoeffizienten vorgesehen sein. Bei dem jeweiligen Filter handelt es sich beispielsweise um einen variablen PT1-Filter oder um einen Filter höherer Ordnung. Vorzugsweise ist der Filter oder ein jeweiliger Filter für den Ist-Ausgangsdruck und/oder für den Ist-LS-Druck vorgesehen. Vorzugsweise ist der druckabhängige Filter derart ausgestaltet, dass bei einer Steigerung des Ist-Ausgangsdrucks der Hydromaschine die Filterung reduziert wird und umgekehrt bei einer Senkung des Ist-Ausgangsdrucks der Hydromaschine die Filterung erhöht wird, um Einfluss auf die Dynamik der Regelung zu nehmen.

Alternativ oder zusätzlich kann ein oder können mehrere Filter, insbesondere mit druckabhängigen Filterkoeffizienten, für die weiteren obenstehend und untenstehend angeführten Regler, insbesondere für eine oder mehrere Eingangsgrößen, eingesetzt sein.

Alternativ oder zusätzlich ist denkbar für den Regler des Ist-Ausgangsdrucks und/oder für einen oder mehrere der obenstehend und untenstehend angeführten Regler, insbesondere für die eine oder mehrere Eingangsgröße/n einen asymmetrischen Filter vorzusehen. Dieser ist abhängig von der Richtung, in der die Schrägscheibe verschwenkt wird. Das heißt die Filterung des Filters in der ersten Verschwenkrichtung ist im Vergleich zur Filterung in der zweiten Verschwenkrichtung verschieden.

In weiterer Ausgestaltung der Erfindung ist ein Verstärkungsfaktor (Kp), insbesondere für den Regler für den Ist-Ausgangsdruck, vorgesehen, der von der Ist-Temperatur des Druckmittels der Hydromaschine, insbesondere des ausgangsseitigen Druckmittels, und/oder der Ist-Drehzahl der Hydromaschine und/oder des Ist-Ausgangsdrucks der Hydromaschine und/oder eines vorgegebenen Druckgradienten oder Soll-Druckgradienten, insbesondere für den Soll-Ausgangsdruck der Hydromaschine, abhängt. Der Verstärkungsfaktor kann somit in Abhängigkeit von diesen Größen ermittelt werden. Der Verstärkungsfaktor kann dann beispielsweise beim Regler mit der Regelabweichung multipliziert werden, wobei die Regelabweichung beispielsweise der Soll-LS-Druck minus der Ist-LS-Druck ist und/oder beispielsweise der Soll-Ausgangsdruck minus der Ist-Ausgangsdruck. Vorzugsweise ist vorgesehen, dass, je kleiner die Ist-Temperatur ist, desto kleiner ist der Verstärkungsfaktor, da hierdurch vorzugsweise im Kaltzustand der Hydromaschine ein Schwingen der Hydromaschine verhindert oder zumindest vermindert werden kann. Entsprechend kann umgekehrt gelten, dass, je größer die Ist-Temperatur ist, desto größer ist der Verstärkungsfaktor. Alternativ oder zusätzlich kann vorgesehen sein, dass, je kleiner die Ist-Drehzahl der Hydromaschine ist, desto größer ist der Verstärkungsfaktor, da der Druckaufbau vom Volumenstrom abhängt und somit von der Drehzahl der Hydromaschine. Entsprechend kann auch hier umgekehrt gelten, dass, je größer die Ist-Drehzahl ist, desto kleiner ist der Verstärkungsfaktor. Alternativ oder zusätzlich kann vorgesehen sein, dass, je größer der Druckgradient des Soll-Ausgangsdrucks ist, desto größer ist der Verstärkungsfaktor. Dies ist vorteilhaft, da, je größer der Druckgradient, desto größer ist die Anforderung zum Ausschwenken der Hydromaschine und somit muss die Hydromaschine schneller reagieren als im Kleinsignalbereich. Umgekehrt gilt dann auch hier, dass, je kleiner der Druckgradient ist, desto kleiner ist der Verstärkungsfaktor. Alternativ oder zusätzlich kann vorgesehen sein, dass, je größer der Ist-Ausgangsdruck ist, desto größer ist der Verstärkungsfaktor. Dies ist vorteilhaft, da bei größerem Ist-Ausgangsdruck, auch die Streckendynamik höher ist. Somit kann die Hydromaschine schneller verschwenkt werden, ohne instabil zu werden. Umgekehrt gilt der gleiche Zusammenhang.

Der Verstärkungsfaktor kann vorteilhafter Weise als arbeitspunktabhängiger Regelparameter ausgebildet sein. Für die Druckregelung und/oder für die Drehmomentregelung und/oder für die Schwenkwinkelregelung kann gelten: je größer der Ist-Ausgangsdruck, desto größer kann der Verstärkungsfaktor sein oder der Verstärkungsfaktor wird bis zu einem vorbestimmten Ist-Ausgangsdruck erhöht und im Anschluss bei weiter steigendem Ist-Ausgangsdruck wieder gesenkt. In anderen Worten kann ein Verstärkungsfaktor auch bei den Reglern für den Ist-Ausgangsdruck und/oder für das Ist-Drehmoment vorgesehen sein, insbesondere für die Ist-Größen. Insbesondere kann in anderen Worten eine druckabhängige Anpassung der Regelkreisverstärkungen vorgesehen sein. Die Regelparameter sind somit im Betrieb der Druckmittelversorgungsanordnung anpassbar. Es erfolgt vorteilhafter Weise eine bedarfsgerechte Anpassung der Regeldynamik im Betrieb.

In weiterer Ausgestaltung der Erfindung kann vorgesehen sein, dass der Soll-Druckgradient oder der maximale Soll-Druckgradient für den Regler des Ist-Ausgangsdrucks vorgesehen ist. Dieser ist vorzugsweise anpassbar und verstellbar. Der Soll-Druckgradient kann dann beispielsweise Einfluss auf den Soll-Ausgangsdruck haben. Ein Einfluss ist beispielsweise derart, dass, je höher der Soll-Druckgradient ist, desto schneller soll die Hydromaschine ausschwenken. Je höher der Soll-Druckgradient, desto schneller wächst die Anforderung als der Ist-Gradient, weshalb die Hydromaschine schneller verschwenkt wird, um den Soll-Druckgradienten zu erreichen. Es ist denkbar, den Soll-Druckgradienten als Begrenzung für den Soll-Ausgangsdruck oder als Begrenzung für die Änderung des Soll-Ausgangsdrucks zu verwenden.

In weiterer Ausgestaltung der Erfindung hat der erste Regelkreis vorzugsweise einen Regler für das Ist-Drehmoment oder die Ist-Leistung auf Basis des Ist-Drehmoments multipliziert mit der Ist-Drehzahl. Als Eingangsgröße kann eine Ist-Drehzahl vorgesehen sein, die von einer Triebwelle, insbesondere über einen Drehzahlsensor, der Hydromaschine abgegriffen ist. Aus der Ist-Drehzahl kann dann das Ist-Drehmoment oder Aufnahmedrehmoment der Hydromaschine (Pumpe) berechnet werden. Das Ist-Drehmoment berechnet sich auch dem Ist-Schwenkwinkel multipliziert mit dem Ist-Ausgangsdruck geteilt durch den hydromechanischen Wirkungsgrad. Der hydromechanische Wirkungsgrad ist eine Funktion aus dem Ist-Ausgangsdruck, aus dem Ist-Schwenkwinkel und der Ist-Drehzahl und kann beispielsweise über eine Kennlinie ermittelbar sein. Des Weiteren kann für den Regler ein Soll-Drehmoment vorgegeben sein. Die ausgangsseitige Stellgröße des Reglers wird vorzugsweise dem Minimalwertbildner zugeführt. Die Kennlinie zum Bestimmen des Ist-Drehmoments ist beispielsweise abhängig vom Ist-Druck und/oder vom Ist-Schwenkwinkel. Mit anderen Worten kann mit dem Regler eine Momentanleistung berechnet werden, insbesondere wenn die Ist-Drehzahl mit einbezogen wird.

In weiterer Ausgestaltung der Erfindung werden die Ist-Größen für den ersten und zweiten Regelkreis oder einen Teil der Ist-Größen und ein oder mehrere Ableitungen davon zur Beruhigung der Signale gefiltert. Hier sind beispielsweise wie vorstehend bereits erläutert ein PT1 Glied oder ein variables PT1 Glied eingesetzt.

Wie obenstehend bereits erläutert, ist denkbar, eine Fördervolumen-Verstellgeschwindigkeit-Vorgabe oder ein maximale Fördervolumen-Verstellgeschwindigkeit für das zweite Steuerungsmodul vorzusehen, die, insbesondere nachgeschaltet zum Minimalwertbildner, dem zweiten Regelkreis zugeführt werden kann. Insbesondere wird die maximale Fördervolumen-Verstellgeschwindigkeit über ein Regelglied der Steuerung zugeführt. Dieses hat als Eingangsgröße vorzugsweise den Stellwert aus dem ersten Regelkreis, also der vom Minimalwertbildner ausgegebene Stellwert. Als weitere Eingangsgröße kann die Fördervolumen-Verstellgeschwindigkeit-Vorgabe vorgesehen sein. Als Ausgangsgröße des Regelglieds kann dann die endgültige Soll-Fördervolumen-Verstellgeschwindigkeit für den zweiten Regelkreis vorgesehen sein. Über die zusätzlich vorgegebene Fördervolumen-Verstellgeschwindigkeit-Vorgabe, die beispielsweise verstellbar ist, wird insbesondere der Stellwert des Minimalwertbildners begrenzt, um eine Regeldynamik der Druckmittelversorgungsanordnung zu beeinflussen. Bei der Fördervolumen-Verstellgeschwindigkeit-Vorgabe kann es sich beispielsweise um ein positives oder negatives Maximum der Fördervolumen-Verstellgeschwindigkeit handeln. Je höher die endgültige Soll-Fördervolumen-Verstellgeschwindigkeit, desto schneller kann die Hydromaschine ausschwenken.

Mit dem vorstehend erläuterten verstellbaren maximalen Soll-Druckgradienten und/oder der verstellbaren Fördervolumen-Verstellgeschwindigkeit-Vorgabe kann auf einfache Weise Einfluss auf die Regeldynamik der Druckmittelversorgungsanordnung genommen werden. Somit kann die Steuerkraft für das Pilotventil abhängig vom Soll-Druckgradienten und/oder von der Fördervolumen-Verstellgeschwindigkeit-Vorgabe sein. Diese Werte sind variabel im Betrieb anpassbar. Es kann somit eine bedarfsgerechte Anpassung der Regeldynamik im Betrieb erfolgen und beispielsweise betriebspunkt- oder arbeitspunktabhängig sein. Durch den oder die Wert/e kann somit eine Limitierung und/oder Anpassung der Pumpendynamik erfolgen. Der Schwenkwinkel der Hydromaschine und/oder die Fördervolumen-Verstellgeschwindigkeit kann dann derart eingeregelt werden, dass der Soll-Wert oder die Soll-Werte nicht überschritten werden. Mit den verstellbaren Größen (insbesondere maximaler Soll-Druckgradienten und/oder insbesondere der verstellbaren Fördervolumen-Verstellgeschwindigkeit-Vorgabe) kann mit anderen Worten eine Anpassung der Dynamik der Druckmittelversorgungsanordnung über Softwareparameter erfolgen, womit beispielsweise ein weiches oder hartes Maschinenverhalten einstellbar ist. Die Dynamik ist auch für Teilfunktionen veränderbar. Eine Teilfunktion kann mit dem Soll-Druckgradienten und die andere Teilfunktion mit der Fördervolumen-Verstellgeschwindigkeit-Vorgabe angepasst sein. Durch die Anpassung der Dynamik ist auch eine Reduzierung von Schwingungen ermöglicht. Des Weiteren können ruckartige Bewegungen vermieden werden. Es hat sich gezeigt, dass die hydraulische Druckmittelversorgungsanordnung zu einer Steigerung des Wirkungsgrads, insbesondere durch weniger Steuerölverbrauch, führt.

Mit anderen Worten ist ein Verfahren offenbart, dass zur Regelung eines Hubvolumens und/oder eines Drehmoments und/oder eines Drucks einer hydrostatischen Maschine vorgesehen ist. Diese kann eine Stellvorrichtung zur Einstellung ihres Hubvolumens aufweisen. Vorzugsweise hat das Verfahren folgende Schritte:
- Erfassen eines vorgegebenen Soll-Drehmoments,
- Erfassen eines vorgegebenen Soll-Hubvolumens,
- Erfassen eines vorgegebenen Soll-Drucks,
- Erfassen eines Ist-Hubvolumens oder eingestelltem Hubvolumens,
- Erfassen eines Ist-Drucks oder eingestelltem Drucks,
- Ermittlung des Ist-Drehmoments oder des eingestellten Drehmoments an der Triebwelle der Maschine.

Als Weiterer Schritt kann ein Regeln eines Volumenstroms in die Stellvorrichtung hinein oder aus der Stellvorrichtung hinaus mittels eines Regelventils zum Einstellen des Hubvolumens auf Basis einer Kraftdifferenz zwischen einer Steuerkraft und einer in entgegengesetzter Richtung an dem Regelventil angreifenden Kraft vorgesehen sein. Die in entgegengesetzter Richtung zur Steuerkraft an dem Regelventil angreifende Kraft kann eine Federkraft sein. Die Steuerkraft kann des Weiteren eine elektrische Kraft eines Elektromagnetenventils sein. In Abhängigkeit des erfassten Hubvolumens und/oder Drucks und/oder Soll-Hubvolumens und/oder Soll-Drucks und/oder Soll-Drehmoment die Maschine eingestellt wird. Das Hubvolumen wird vorzugsweise so eingestellt, dass stets das kleinste Hubvolumen eingestellt wird, welches zum Erreichen einer der Soll-Größen führt.

Wie einleitend erläutert kann aus dem Schwenkwinkel der Schrägscheibe der Volumenstrom der Hydromaschine oder Verstellpumpe ermittelt werden. Wird die Verstellpumpe nicht angetrieben, und ist das Stellsystem drucklos, dann schwenkt die Verstellpumpe durch eine Federkraft einer Feder beispielsweise auf ein maximales Fördervolumen. Im angetriebenen Zustand der Verstellpumpe und bei stromlosem Pilotventil und verschlossenem Pumpenausgang schwenkt die Verstellpumpe dagegen auf einen Nullhubdruck. Ein Gleichgewicht zwischen Pumpendruck am Stellkolben und Federkraft der Feder stellt sich bei etwa 4 bis 8 bar ein. Die Grundeinstellung wird üblicherweise bei spannungsloser Regelelektronik eingenommen. Denkbar wäre auch umgekehrt, dass bei stromlosen Pilotventil die Verstellpumpe auf maximales Fördervolumen verschwenkt wird, um eine Druckmittelversorgung eines Verbrauchers, wie beispielsweise einer Lenkung sicherzustellen. Vorzugsweise ist dann ein Druckbegrenzungsventil vorgesehen, um den Ist-Ausgangsdruck der Hydromaschine zu begrenzen.

Die Druckmittelversorgungsanordnung wird vorzugsweise für mobile Arbeitsmaschinen eingesetzt, die ein Load-Sensing(LS)- oder ein LUDV-geregeltes System aufweisen. Diese können eine Drehmomentlimitierung und/oder eine Winkellimitierung eines Schwenkwinkels der Hydromaschine in Form beispielsweise einer verstellbaren Axialkolbenmaschine haben. Als mobile Arbeitsmaschine ist beispielsweise ein Kompakt-Minibagger oder ein Radlader vorgesehen.

Mit der hydraulischen Druckmittelversorgungsanordnung ist eine dynamische und zeitgleiche Parallelregelung von Hauptprozessgrößen wie beispielsweise einem Ist-Druck, einem Ist-Differential-Druck, einem Ist-Drehmoment und/oder einem Ist-Schwenkwinkel ermöglicht. Dies führt zu einem äußerst flexiblen Einsatz in nahezu allen offenen hydraulischen Kreisen und der weitere Vergleich zur bisherigen Lösungen die Möglichkeit einer Einflussnahme auf das hydraulische System, insbesondere auch während eines Betriebs. Es kann eine bedarfsgerechte Anpassung der Dynamik im Betrieb auf der mobilen Arbeitsmaschine durch die Datenschnittstelle oder Softwareschnittstelle über die Parameter erfolgen, beispielsweise für verschiedene Lastsituationen und/oder für unterschiedliche Fahrer. Um die Dynamik einzustellen, sind im Unterschied zum Stand der Technik keine Dämpfungsdüsen und/oder hydraulische Vorrichtungen zum Manipulieren der LS-Signale notwendig, womit ein Verluststeueröl vermieden oder zumindest minimiert ist. Dies führt zu einer Wirkungsgradsteigerung. Außerdem ist eine einfache Integration der hydraulischen Druckmittelversorgungsanordnung in die mobile Arbeitsmaschine ermöglicht. Beispielsweise fallen hydraulische Schlauchverbindungen oder Leitungen an der Hydromaschine weg, und es ist/sind beispielsweise auch keine LS-Leitung/en mehr notwendig, womit Kosten reduziert werden können.

Zum Abgreifen der Ist-Größen können Sensoren vorgesehen sein. Hier können beispielsweise ein oder mehrere Sensoren zum Abgreifen des Lastdrucks oder der Lastdrücke des oder der Verbraucher vorgesehen sein. Denkbar ist auch ein Sensor für den Ist-Ausgangsdruck einzusetzen. Als weiterer Sensor kann ein Sensor für eine Ist-Drehzahl der Hydromaschine vorgesehen sein. Auch ist denkbar, einen Sensor zum Messen der Temperatur einzusetzen.

Vorzugsweise ist eine mobile Arbeitsmaschine mit der hydraulischen Druckmittelversorgungsanordnung vorgesehen.

### Kurze Beschreibung der Zeichnungen

Bevorzugte Ausführungsbeispiele der Erfindung werden im Folgenden anhand schematischer Zeichnungen näher erläutert. Es zeigen:
Figur 1 in einer schematischen Darstellung eine hydraulische Druckmittelversorgungsanordnung gemäß einem ersten Ausführungsbeispiel,
Figur 2 in einer schematischen Darstellung ein zweites Steuerungsmodul für die Druckmittelversorgungsanordnung aus Fig. 1,
Figur 3 in einer schematischen Darstellung ein zweites Steuerungsmodul für die Druckmittelversorgungsanordnung aus Fig. 1 gemäß einem weiteren Ausführungsbeispiel,
Fig. 4 in einer schematischen Darstellung eine Druckmittelversorgungsanordnung für eine mobile Arbeitsmaschine gemäß einem ersten Ausführungsbeispiel,

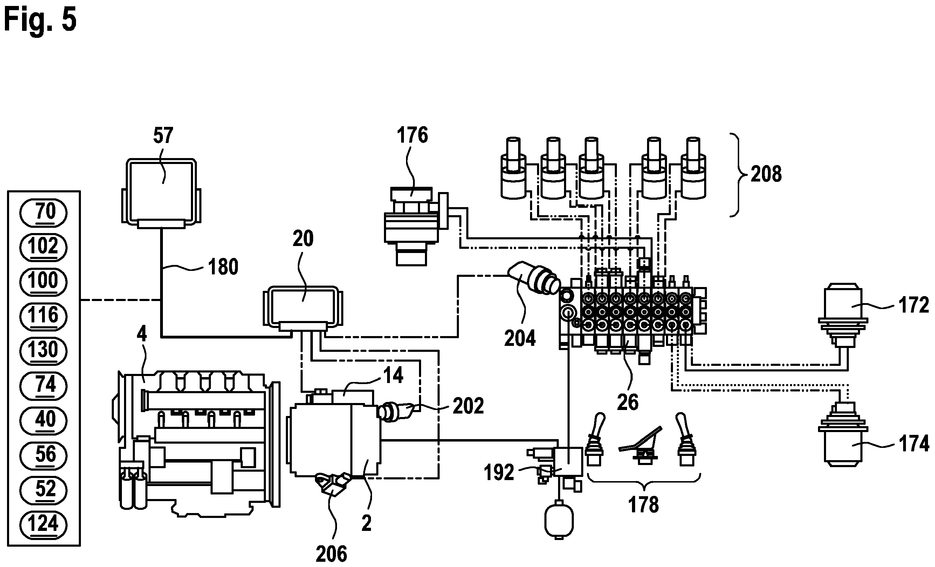

Fig. 5 in einer schematischen Darstellung eine Druckmittelversorgungsanordnung für eine mobile Arbeitsmaschine gemäß einem weiteren Ausführungsbeispiel.

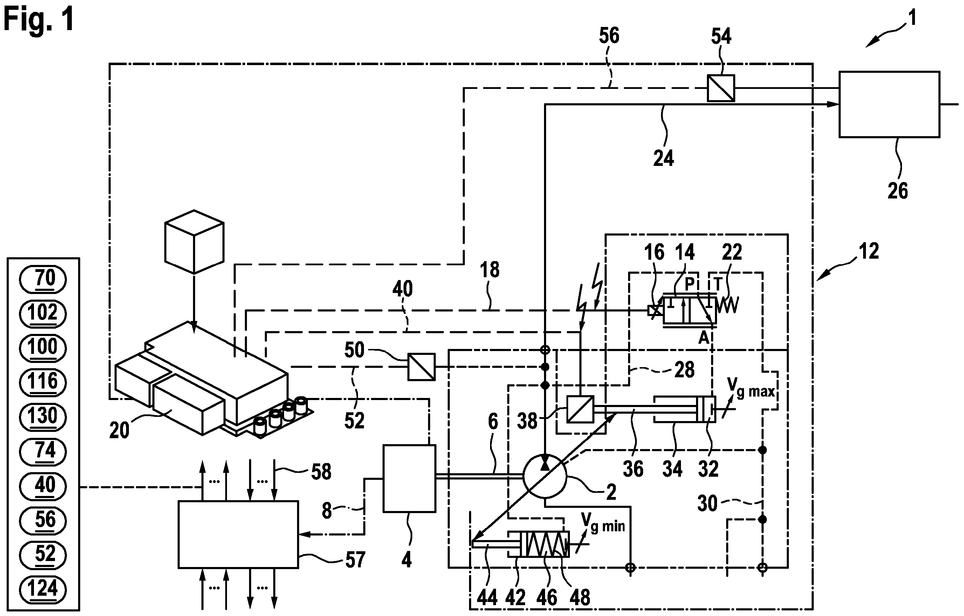

Gemäß Fig. 1 ist eine hydraulische Druckmittelversorgungsanordnung 1 gezeigt, die eine Hydromaschine in Form einer Axialkolbenmaschine 2 aufweist. Diese weist eine Schwenkwiege zum Verstellen eines Fördervolumens auf. Die Axialkolbenmaschine 2 ist sowohl als Pumpe als auch als Motor einsetzbar. Angetrieben wird die Axialkolbenmaschine 2 über eine Antriebseinheit 4, bei der es sich beispielsweise um einen Verbrennungsmotor, wie beispielsweise ein Dieselaggregat, oder um einen Elektromotor handeln kann. Über eine Triebwelle 6 ist die Axialkolbenmaschine 2 mit der Antriebseinheit 4 verbunden. Eine Drehzahl 8 der Triebwelle 6 kann über nicht dargestellte Mittel, beispielsweise über einen Drehzahlsensor, abgegriffen werden und einer Steuerung der Druckmittelversorgungsanordnung 1 zugeführt werden. Für die Axialkolbenmaschine 2 ist ein Verstellmechanismus 12 vorgesehen. Dieser hat ein Pilotventil 14. Dessen Ventilschieber ist elektrisch proportional über einen Aktor 16 ansteuerbar. Hierfür wird dem Aktor 16 eine Stellgröße 18 von einem zweiten Steuerungsmodul 20 zugeführt. Der Ventilschieber des Pilotventils 14 in Richtung einer Grundstellung mit einer Federkraft einer Ventilfeder 22 beaufschlagt. Die Federkraft wirkt dabei entgegen der Aktorkraft des Aktors 16.

Die Axialkolbenmaschine 2 ist ausgangsseitig mit einer Druckleitung 24 verbunden, die wiederum mit einem Hauptsteuerventil 26 oder Ventilblock verbunden ist. Über dieses kann die Druckmittelversorgung zwischen der Axialkolbenmaschine 2 und einem oder mehreren Verbrauchern gesteuert werden. Von der Druckleitung 24 zweigt eine Steuerleitung 28 ab, die an einen Druckanschluss P des Pilotventils 14 angeschlossen ist. Hierbei kann eine interne Versorgung der Axialkolbenmaschine 2 durch eine entsprechende Konstruktion gewährleistet sein. Die Steuerleitung 28 ist beispielsweise in einem Gehäuse der Axialkolbenmaschine 2 ausgebildet. Des Weiteren weist das Pilotventil 14 einen Tankanschluss T auf, der über eine Tankleitung 30 mit einem Tank verbunden ist. Außerdem hat das Pilotventil 14 einen Arbeitsanschluss A, der mit einem Steuerraum 32 eines Stellzylinders 34 verbunden ist. Der Steuerraum 32 wird dabei von einem Stellkolben 36 des Stellzylinders begrenzt. Über den Stellkolben 36 kann dann eine Schrägscheibe der Axialkolbenmaschine 2 verstellt werden. Ein Verschiebeweg des Stellkolbens 36 wird über einen Wegaufnehmer 38 erfasst. Alternativ oder zusätzlich wird ein Schwenkwinkel der Schwenkwiege der Axialkolbenmaschine 2 über einen rotatorischen, magnetischen Sensor von einer Schwenkachse der Schwenkwiege abgegriffen. Über den erfassten Weg kann dann das Ist-Fördervolumen oder das Ist-Verdrängungsvolumen der Axialkolbenmaschine 2 ermittelt werden. Das Ist-Fördervolumen 40 wird dann der Steuerung 20 gemeldet. In der Grundstellung des Ventilschiebers des Pilotventils 14 ist der Druckanschluss P mit dem Arbeitsanschluss A verbunden und der Tankanschluss T abgesperrt. Bei Beaufschlagung des Ventilschiebers mit der Aktorkraft des Aktors 16 wird der Ventilschiebers ausgehend von seiner Grundstellung in Richtung von Schaltstellungen bewegt, bei denen der Druckanschluss P gesperrt und der Arbeitsanschluss A mit dem Tankanschluss T verbunden ist. Somit wird in der Grundstellung des Ventilschiebers des Pilotventils 14 der Stellkolben 36 mit Druckmittel aus der Druckleitung 24 beaufschlagt. Des Weiteren ist bei dem Verstellmechanismus 12 ein Zylinder 42 vorgesehen. Dieser hat einen Stellkolben 44, der an der Schrägscheibe der Axialkolbenmaschine 2 angreift. Der Stellkolben 44 begrenzt einen Steuerraum 46, der mit der Druckleitung 24 verbunden ist. Über Druckmittel des Steuerraums 46 und über die Federkraft einer Feder 48 wird der Stellkolben 44 derart beaufschlagt, dass dieser die Schrägscheibe in Richtung einer Vergrößerung des Fördervolumens belastet.

Des Weiteren ist ein Drucksensor 50 vorgesehen, über den der Druck in der Druckleitung 24 abgegriffen und dem zweiten Steuerungsmodul 20 gemeldet wird, wobei es sich bei dem Druck um einen Ist-Ausgangsdruck 52 handelt. Außerdem ist ein Drucksensor 54 vorgesehen, der den höchsten Ist-Lastdruck (Ist-LS-Druck) 56 erfasst, der dem zweiten Steuerungsmodul 20 übermittelt wird.

Ein erstes Steuerungsmodul 57 ist über ein CAN Interface 58 mit zweiten Steuerungsmodul 20 verbunden, um insbesondere die Ist-Drehzahl 8 an das zweite Steuerungsmodul 20 zu übermitteln. Denkbar ist auch, die Ist-Drehzahl 8 direkt dem zweiten Steuerungsmodul 20 zuzuführen.

Im Einsatz der Druckmittelversorgungsanordnung 1 wird über das Pilotventil 14 und den Stellkolben 36 die Position der Schrägscheibe der Axialkolbenmaschine 2 gesteuert. Ein geförderter Volumenstrom der Axialkolbenmaschine 2 ist proportional zur Stellung der Schrägscheibe. Der durch die Feder 48 vorgespannte Verstellkolben 44 oder Gegenkolben wird ständig mit dem Ist-Ausgangsdruck oder Pumpendruck beaufschlagt. Bei nichtdrehender Axialkolbenmaschine 2 und drucklosem Verstellmechanismus 12 wird die Schrägscheibe durch die Feder 48 in einer Position +100 Prozent gehalten. Bei angetriebener Axialkolbenmaschine 2 und stromlosem Aktor 16 des Pilotventils 14 schwenkt die Schrägscheibe auf einen Nullhubdruck, da der Stellkolben 36 mit Druckmittel der Druckleitung 24 beaufschlagt ist. Ein Gleichgewicht zwischen einem Ist-Ausgangsdruck am Stellkolben 36 und der Federkraft der Feder 48 stellt sich bei einem vorbestimmten Druck oder Druckbereich ein, beispielsweise zwischen 8 bis 12 bar. Dieser Nullhubbetrieb wird beispielsweise bei einer spannungslosen Elektronik oder spannungslosen zweiten Steuerungsmodul 20 eingenommen. Die Ansteuerung des Pilotventils 14 erfolgt über das zweite Steuerungsmodul 20, bei der es sich beispielsweise um vorzugsweise eine digitale Elektronik, alternativ um eine analoge Elektronik, handelt. Das zweite Steuerungsmodul 20 verarbeitet die benötigten Regelsignale, was untenstehend näher erläutert ist.

Über die Datenschnittstelle 58 kann dem zweiten Steuerungsmodul 20 vom ersten Steuerungsmodul 57 beispielsweise ein Soll-Fördervolumen 70 oder Soll-Schwenkwinkel oder ein maximaler Soll-Druckgradient 102 und/oder eine Soll-Druckdifferenz 100 und/oder ein Soll-Drehmoment 116 und/oder eine maximale Soll-Fördervolumen-Verstellgeschwindigkeit 130 und/oder ein Soll-Ausgangsdruck 74 zugeführt werden. Weiterhin ist denkbar, vom zweiten Steuerungsmodul 20 zum ersten Steuerungsmodul 57 ein Ist-Fördervolumen 40 oder einen Ist-Schwenkwinkel und/oder einen Ist-LS-Druck 56 und/oder einen Ist-Ausgangsdruck 52 und/oder ein Ist-Drehmoment 124 zuzuführen. Die Größen 40, 56, 52 und/oder 124 sind hierbei vorzugsweise gefiltert.

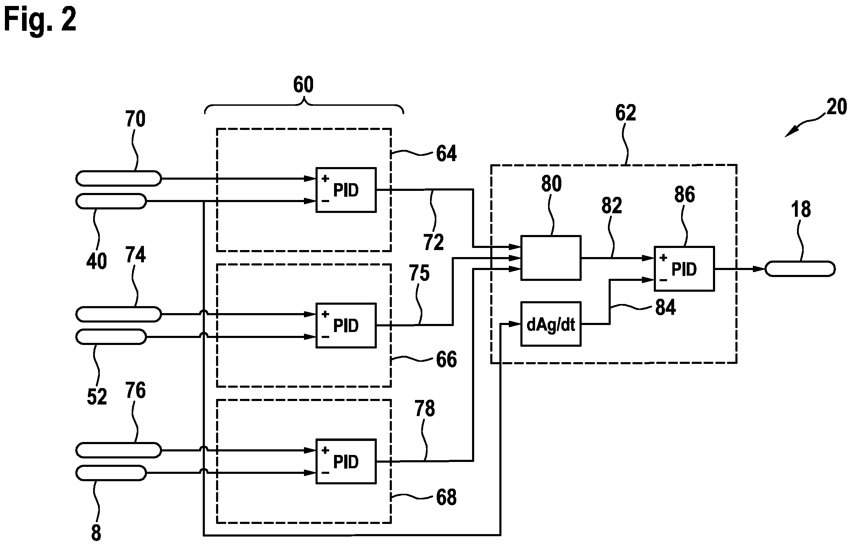

Fig. 2 zeigt schematisch eine Funktionsweise des zweiten Steuerungsmoduls 20. Dieses hat einen ersten Regelkreis 60 und einen zweiten Regelkreis 62. Der erste Regelkreis 60 weist einen Regler 64 für einen Schwenkwinkel der Schrägscheibe der Axialkolbenmaschine 2 aus Fig. 1, einen Regler 66 für den Ausgangsdruck der Axialkolbenmaschine 2 und einen Regler 68 für ein Drehmoment der Axialkolbenmaschine 2 auf. Der Regler 64 hat als Eingangsgrößen ein Soll-Fördervolumen 70 und das Ist-Fördervolumen 40. Als Ausgangsgröße ist eine Stellgröße 72 vorgesehen. Der Regler 66 weist als Eingangsgrößen einen Soll-Ausgangsdruck 74 und den Ist-Ausgangsdruck 52 auf. Als Ausgangsgröße ist eine Stellgröße 75 vorgesehen. Der Regler 68 weist als Eingangsgrößen eine Ist-Drehmoment 76 oder ein Soll-Drehmoment auf. Als weitere Eingangsgröße ist das Ist-Drehmoment vorgesehen, das wiederum beispielsweise anhand eines Kennfelds über die Ist-Drehzahl 8 ermittelbar ist. Als Ausgangsgröße für den Regler 68 ist eine Stellgröße 78 vorgesehen. Bei dem jeweiligen Regler 64 bis 68 werden die Eingangsgrößen jeweils einem Regelglied in Form eines PID-Reglers zugeführt.

Die Stellgrößen 72, 75 und 78 werden einem Minimalwertbildner 80 zugeführt. Dieser sorgt dafür, dass automatisch nur der dem gewünschten Arbeitspunkt zugeordnete Regler 72, 75 oder 78 aktiv ist. Hierbei wird dann entweder der Ausgangsdruck, das Drehmoment oder das Fördervolumen exakt ausgeregelt, wobei die jeweils beiden anderen Größen unterhalb eines vorgegebenen Sollwertes liegen. Ein Ausgangssignal des Minimalwertbildners 80 ist dann ein Sollwert in Form einer Fördervolumen-Verstellgeschwindigkeit oder Soll-Fördervolumen-Verstellgeschwindigkeit 82. Diese ist dann eine Eingangsgröße für den zweiten unterlagerten Regelkreis 62. Eine weitere Eingangsgröße des zweiten Regelkreises 62 ist die Ableitung des Ist-Fördervolumens 40, womit es sich dann um eine Ist-Fördervolumen-Verstellgeschwindigkeit 84 handelt. Die Eingangsgrößen 82 und 84 für den zweiten Regelkreis 62 werden dann einem Regelglied in Form eines PID-Glieds 86 zugeführt. Dieses gibt dann die Stellgröße 18 für das Pilotventil 14 aus Fig. 1 aus.

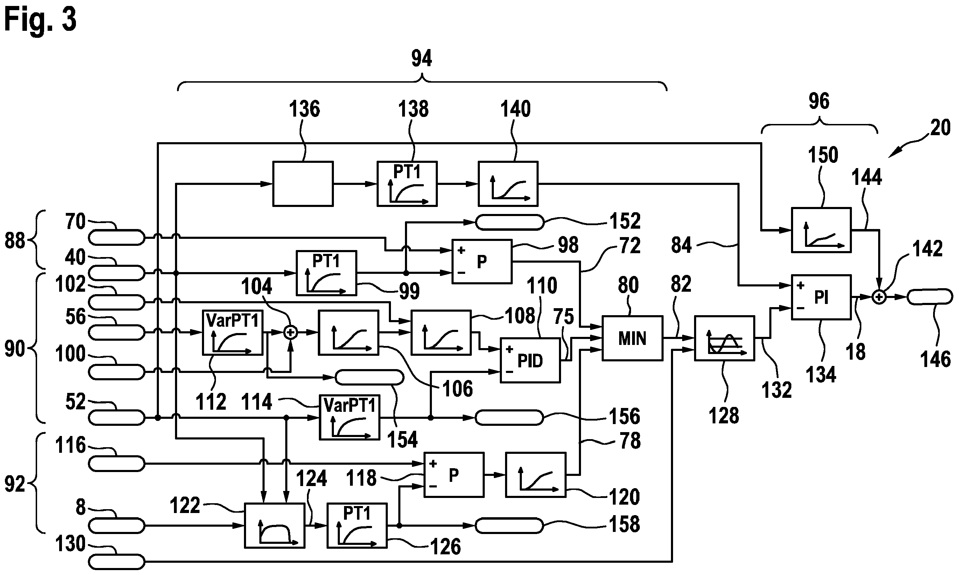

Gemäß Fig. 3 ist eine weitere Ausführungsform für das zweite Steuerungsmodul 20 aus Fig. 1 gezeigt. Diese hat einen Regler 88 für das Fördervolumen der Axialkolbenmaschine 2, s. auch Fig. 1. Des Weiteren ist ein Regler 90 für den Ausgangsdruck der Axialkolbenmaschine 2 und ein Regler 92 für das Drehmoment der Axialkolbenmaschine 2 vorgesehen. Dies ist ein Teil eines ersten Regelkreises 94. Des Weiteren ist ein dem ersten Regelkreis unterlagerter zweiter Regelkreis 96 für die Fördervolumen-Verstellgeschwindigkeit der Axialkolbenmaschine 2 vorgesehen.

Der Regler 88 weist ein Regelglied 98 in Form eines P-Glieds auf. Als Eingangsgröße sind das Soll-Fördervolumen 70 und das Ist-Fördervolumen 40 vorgesehen. Das Ist-Fördervolumen 40 wird mit dem Regelglied 98 über einen Filter in Form eines PT1-Filters zugeführt. Ausgangsseitig des Reglers 88 ist die Stellgröße 72 als Ausgangsgröße vorgesehen, die dem Minimalwertbildner 80 zugeführt wird.

Der Regler 90 weist als Eingangsgrößen den Ist-Ausgangsdruck 52, den Ist-LS-Druck 56, eine Soll-Druckdifferenz 100 und einen Soll-Druckgradienten 102 auf. Der Ist-LS-Druck 56 und die Soll-Druckdifferenz 100 werden über ein Summierglied 104 zu einem Soll-Ausgangsdruck verknüpft. Der Soll-Ausgangsdruck wird dann einem Regelglied 106 in Form eines invertierten PT1-Glieds zugeführt, das einen voraussichtlichen Signalverlauf abschätzt. Der Soll-Ausgangsdruck wird dann weiter einem Regelglied 108 zugeführt, das als weitere Eingangsgröße den Soll-Druckgradienten 102 aufweist. Der Soll-Druckgradient 102 gibt dann den maximal möglichen Gradienten vor, der vorgesehen sein soll. Über das Regelglied 108 wird dann der Soll-Ausgangsdruck von dem vorgegebenen Soll-Druckgradienten 102 derart beeinflusst, dass mit dem Soll-Druckgradienten 102 die Dynamik der Druckmittelversorgungsanordnung 1 aus Fig. 1 steuerbar ist. Beispielsweise kann die Beeinflussung derart sein, dass, je höher der Soll-Druckgradient 102 ist, desto schneller kann die Schrägscheibe der Axialkolbenmaschine 2 verstellt werden. Umgekehrt gilt dann, je kleiner der Soll-Druckgradient ist, desto langsamer wird die Schrägscheibe der Axialkolbenmaschine 2 verstellt. Nach dem Regelglied 108 wird dann der Soll-Ausgangsdruck einem Regelglied 110 in Form eines PID-Glieds zugeführt. Als weitere Eingangsgröße für das Regelglied 110 ist dann der Ist-Ausgangsdruck 52 vorgesehen. Als Ausgangsgröße des Regelglieds 110 ergibt sich die Stellgröße 75, die dem Minimalwertbildner 80 zugeführt wird.

Der Ist-LS-Druck 56 des Reglers 90 wird vor dem Summierglied 104 einem Filter 112 zugeführt, bei dem es sich um einen variablen PT1-Filter handelt. Das Gleiche gilt für den Ist-Ausgangsdruck, der vor dem Regelglied 110 ebenfalls einem Filter 114 in Form eines variablen PT1-Filters zugeführt wird. Die Filter 112 und 114 haben variable, insbesondere druckabhängige, Filterkoeffizienten, was obenstehend näher erläutert ist.

Der Regler 92 hat als Eingangsgrößen die Ist-Drehzahl 8, das Ist-Fördervolumen 40, den Ist-Ausgangsdruck 52 und ein Soll-Drehmoment 116. Die Eingangsgrößen werden einem Regelglied 118 in Form eines P-Glieds zugeführt. Als Ausgangsgröße für das Regelglied 118 ist die Stellgröße 78 vorgesehen, die dem Minimalwertbildner 80 zugeführt ist. Nach dem Regelglied 118 ist für die Stellgröße 78 ein Regelglied 120 vorgesehen, bei dem es sich wie bei dem Regelglied 106 um einen invertierten PT1-Filter handelt. Des Weiteren wird die Ist-Drehzahl, das Ist-Fördervolumen 40 und der Ist-Ausgangsdruck 8 vor Zuführung zum Regelglied 118 einem Regelglied 122 zugeführt. Dieses dient zur Berechnung eines Ist-Drehmoments 124 basierend auf der Ist-Drehzahl 8, auf dem Ist-Fördervolumen 40 und dem Ist-Ausgangsdruck 8. Die Berechnung erfolgt anhand eines Kennfelds des Regelglieds 122. Das Kennfeld ist abhängig von dem Ist-Ausgangsdruck 52, der dem Regelglied 122 zugeführt wird. Des Weiteren wird dem Regelglied 122 das Ist-Fördervolumen 40 zugeführt. Das Kennfeld kann dann alternativ oder zusätzlich vom Ist-Fördervolumen 40 abhängen. Mit anderen Worten wird das Ist-Drehmoment 124 aus der Ist-Drehzahl 8 und aus dem Ist-Ausgangsdruck 52 und/oder aus dem Ist-Fördervolumen 40 gebildet. Das Ist-Drehmoment 124 wird dann im Anschluss einem Filter 126 in Form eines PT1-Glieds zugeführt, bevor es zum Regelglied 118 gelangt.

Des Weiteren wird das Ist-Fördervolumen 40, bevor es dem Regelglied 98 zugeführt wird, einem Filter 99 in Form eines PT1-Glieds zugeführt.

Der Minimalwertbildner 80 bildet aus den Stellgrößen 72, 75 und 78 die Soll-Fördervolumen-Verstellgeschwindigkeit 82. Diese wird einem Regelglied 128 zugeführt. Mit diesem kann die Dynamik der Druckmittelversorgungsanordnung 1 beeinflusst werden. Hierfür ist als weitere Eingangsgröße für das Regelglied 128 eine Fördervolumen-Verstellgeschwindigkeit-Vorgabe 130 vorgesehen, die verstellbar ist. Beispielsweise ist mit der Fördervolumen-Verstellgeschwindigkeit-Vorgabe 130, die aus dem Minimalwertbildner 80 ausgegebene Soll-Fördervolumen-Verstellgeschwindigkeit 82 limitierbar und/oder derart beeinflussbar, dass, je höher die Größe 130 ist, desto schneller kann die Schrägscheibe der Axialkolbenmaschine 2 verschwenkt werden und umgekehrt. Somit kann die Dynamik der Druckmittelversorgungsanordnung 1 durch Verstellen der Fördervolumen-Verstellgeschwindigkeit-Vorgabe 130 und/oder durch Verstellen des Soll-Druckgradienten 102 beeinflusst werden. Beispielsweise kann hierdurch die Druckmittelversorgungsanordnung 1 an unterschiedliche Arbeitsmaschinen und/oder an unterschiedliche Einsatzbedingungen und/oder an unterschiedliche Einsatzzwecke auf einfache und kostengünstige Weise angepasst werden.

Nach dem Regelglied 128 wird die endgültige Soll-Fördervolumen-Verstellgeschwindigkeit 132 dem zweiten Regelkreis 96 als Eingangsgröße zugeführt. Dieser hat ein Regelglied 134 in Form eines PI-Glieds. Als weitere Eingangsgröße für das Regelglied 134 ist die Ist-Fördervolumen-Verstellgeschwindigkeit 84 vorgesehen. Diese basiert auf dem Ist-Fördervolumen 40, das in einem Regelglied 136 abgeleitet wird. Danach wird die Ableitung, also die Ist-Fördervolumen-Verstellgeschwindigkeit, einem Filter 138 in Form eines PT1-Filters zugeführt. Anschließend ist ein Regelglied 140 in Form eines invertierten PT1-Filters vorgesehen, bevor die Ist-Größe 84 dem Regelglied 134 zugeführt ist. Das Regelglied 134 des zweiten Regelkreises 96 weist als Ausgangsgröße die Stellgröße 18 für das Pilotventil 14 aus Fig. 1 auf. Diese wird einem Summierglied 142 zugeführt. Als weitere Eingangsgröße für das Summierglied 142 ist ein Vorsteuerwert 144 vorgesehen. Bei diesem handelt es sich um eine Ausgangsgröße eines Regelglieds 150, das als Eingangsgröße den Ist-Ausgangsdruck 52 aufweist. Basierend auf dem Ist-Ausgangsdruck 52 wird dann der Vorsteuerwert 144 ermittelt. Das Summierglied 142 verknüpft dann die Stellgröße 18 und den Vorsteuerwert 144, womit ein Neutralstrom des Pilotventils vorgesteuert ist. Es erfolgt damit eine druckabhängige Vorgabe eines Neutralsignalwertes für das Pilotventil 14 aus Fig. 1. Dies hat den Vorteil, dass die Steuerung 20 hinsichtlich dieser Steuerungsaufgabe entlastet wird. Als Ausgangsgröße des Summierglieds 142 ist dann eine endgültige Stellgröße 146 für das Pilotventil 14 vorgesehen.

Es ist denkbar, dass dem Summierglied 142 ein in Fig. 3 nicht dargestelltes Regelglied nachgelagert ist, das als Eingangsgröße die Stellgröße 146 hat. Diese wird durch das Regelglied mit einem hochfrequenten Signal überlagert, damit der Ventilschieber des Pilotventils 14 ständig in axialer Schwingbewegung ist, um ein Festfahren des Ventilschiebers zu vermeiden. Als Ausgangsgröße des Regelglieds ist dann die endgültige Stellgröße für das Pilotventil 14 vorgesehen. Die Überlagerung mit dem hochfrequenten Signal kann als "Dithering" bezeichnet werden.

Gemäß Fig. 3 kann das Ist-Fördervolumen 40 nach dem Filter 99 als gefiltertes Ist-Fördervolumen 152 dem ersten Steuerungsmodul 57 aus Fig.1 zugeführt werden. Des Weiteren kann der Ist-LS-Druck nach dem Filter 112 dem ersten Steuerungsmodul 57 aus Fig.1 als gefilterter Ist-LS-Druck 154 zugeführt werden. Der Ist-Ausgangsdruck 52 kann nach dem Filter 114 ebenfalls dem ersten Steuerungsmodul 57 als gefilterter Ist-Ausgangsdruck 156 zugeführt werden. Außerdem kann das Ist-Drehmoment 124 nach dem Filter 126 dem ersten Steuerungsmodul 57 als gefiltertes Ist-Drehmoment 158 zugeführt werden.

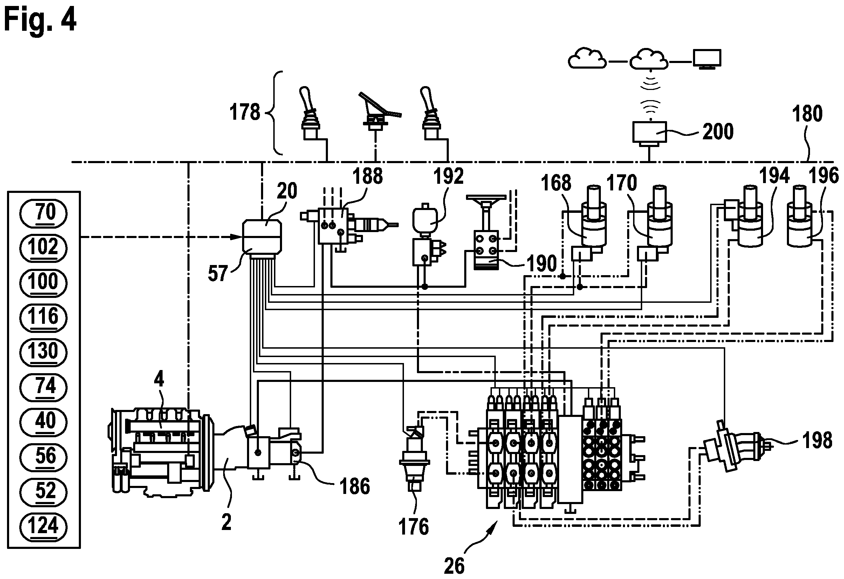

Fig. 4 zeigt die Druckmittelversorgungsanordnung für eine mobile Arbeitsmaschine in Form eines Telehandlers. Diese weist zwei Axialkolbenmaschinen 2 und 186 auf, die über eine gemeinsame Triebwelle von der Antriebseinheit 4 in Form eines Dieselaggregats angetrieben sind. Pilotventile der Axialkolbenmaschine 2, 186 werden wie obenstehend erläutert über die Steuerung 20gesteuert. Die Axialkolbenmaschine 186 dient zur Druckmittel-versorgung einer Radbremse188, eines Lenksystem 190 und einer Pilotölversorgung 192. Die Pilotölversorgung192ist für das Hauptsteuerventil 26 bzw. dem Hauptsteuerventilblock vorgesehen. Über diesen wird die Druckmittelversorgung von Hydrozylindern 168, 170, 194, 196 gesteuert. Des Weiteren wird eine eingesetzte Hydromaschine 198 und der hydraulische Hilfsmotor 176 über das Hauptsteuerventil 26 gesteuert. Es sind Eingabemittel 178 vorgesehen, die durch den CAN-Bus 180 beispielsweise mit dem zweiten Steuerungunsmodul 20 verbunden sind. Des Weiteren ist eine Kommunikationseinrichtung 200 vorgesehen, um kabellos, beispielsweise über Funk oder WiFi, eine Kommunikation mit einem Server und/oder mit einem Rechner durchzuführen. Beispielsweise können dann über die Kommunikationseinrichtung 200 Eingangsgrößen für das zweite Steuerungsmodul 20 angepasst werden und/oder eine Software erweitert oder upgedated werden. Außerdem ist es möglich, Daten über die Kommunikationseinrichtung 200 zu senden, die Informationen über einen Zustand der Druckmittelversorgungsanordnung 1 beinhalten.

Die Steuerungsmodule 20 und 57 sind gemäß Fig. 4 in einem gemeinsamen Gehäuse angeordnet. Innerhalb des Gehäuses ist die Datenschnittstelle vorgesehen, über die die Größen 70, 102, 100, 116, 130, 74, 40, 56, 52 und 124 übertragbar sind.

Gemäß Fig. 8 ist eine Druckmittelversorgungsanordnung für einen Kompaktbagger gezeigt. Hierbei ist die Axialkolbenmaschine 2 ersichtlich, die von der Antriebseinheit 4 in Form eines Dieselaggregats angetrieben ist. Des Weiteren ist das zweite Steuerungsmodul 20 gezeigt, das beispielsweise mit einem Drucksensor 202 verbunden ist, der den Ist-Ausgangsdruck der Axialkolbenmaschine 2 abgreift. Außerdem ist das zweite Steuerungsmodul 20 mit einem Drucksensor 204 verbunden, der den höchsten Lastdruck über das Hauptsteuerventil 26 bzw. den Hauptsteuerblock abgreift. Des Weiteren ist das zweite Steuerungsmodul 20 mit einem Sensor 206 für den Schwenkwinkel der Schrägscheibe der Axialkolbenmaschine 2 verbunden. Außerdem ist das Pilotventil 14 mit dem zweiten Steuerungsmodul 20 verbunden. An das Hauptsteuerventil 26 sind fünf Hydrozylinder 208 angeschlossen. Des Weiteren sind die Hydromaschinen 172, 174 und der hydraulische Hilfsmotor 176 angeschlossen. Optional kann die Pilotölversorgung 192 vorgesehen sein. Eingabemittel 178 können hydraulisch beispielsweise das Hauptsteuerventil 26 steuern oder über den CAN-Bus 180 mit der Druckmittelversorgungsanordnung verbunden sein. Neben dem zweiten Steuerungsmodul 20 ist des Weiteren das erste Steuerungsmodul 57 gezeigt. Über die Datenschnittstelle in Form des CAN-Buses können dann die Größen 70, 102, 100, 116, 130, 74, 40, 56, 52 und/oder 124 ausgetauscht werden.

## Patentansprüche

1. Hydraulische Druckmittelversorgungsanordnung mit einer Hydromaschine (2) zur Druckmittelversorgung von zumindest einem hydraulischen Verbraucher (168, 170, 194, 196, 208) mit einem hydraulischen Steuerblock (26) zum Steuern des zumindest einen Verbrauchers (168, 170, 194, 196, 208), und mit einem ersten und zweiten Steuerungsmodul (20, 57), wobei über das erste Steuerungsmodul (57) der Steuerblock (26) über zumindest ein erstes Stellsignal steuerbar ist, wobei zwischen den Steuerungsmodulen (20, 57) eine Datenschnittstelle (58) vorgesehen ist, und wobei das erste Steuerungsmodul (57) konfiguriert ist, als zweites Stellsignal einen Soll-Ausgangsdruck (74) für die Hydromaschine (2, 186) und/oder ein Soll-Fördervolumen (70) für die Hydromaschine (2, 186) dem zweiten Steuerungsmodul (20) als Eingangsgröße/n über die Datenschnittstelle (58) zu übergeben, wobei das zweite Steuerungsmodul (20) konfiguriert ist, anhand des Soll-Ausgangsdrucks (74) und/oder anhand des Soll-Fördervolumens (70) einen Verstellmechanismus (12) der Hydromaschine (2) mit einem Ventilstellsignal (18, 146) zu steuern, und wobei Druckmittelversorgungsanordnung konfiguriert ist, dass über die Datenschnittstelle (58) zumindest ein hydraulischer Parameter (70, 74, 100, 102, 116, 130) an das zweite Steuerungsmodul (20) übertragen wird, der eine Dynamik des Verstellmechanismus (12) der Hydromaschine (2) vorgibt und/oder limitiert, wobei als Parameter eine maximale Fördervolumen-Verstellgeschwindigkeit (130) der Hydromaschine (2) und/oder ein maximaler Druckgradient (102) für den Ist-Ausgangsdruck (52) der Hydromaschine (2) und/oder ein maximaler Soll-Differentialdruck (100) für die Hydromaschine (2) und/oder ein maximaler Drehmomentgradient vorgesehen ist.

2. Druckmittelversorgungsanordnung nach Anspruch 1, wobei ein weiteres Stellsignal an das zweite Steuerungsmodul (20) über die Datenschnittstelle (58) übertragen wird, welches die Dynamik des Verstellmechanismus (12) der Hydromaschine (2) vorgibt und/oder limitiert, wobei als weiteres Stellsignal für das zweite Steuerungsmodul (20) ein Soll-Drehmoment (116) über die Datenschnittstelle (58) zugeführt werden kann.

3. Druckmittelversorgungsanordnung nach einem der vorhergehenden Ansprüche, wobei ein Parameter oder ein Teil der Parameter oder alle Parameter in Abhängigkeit von einer Temperatur eines Druckmittels und/oder von einer Ist-Drehzahl der Hydromaschine (2) und/oder vom Ist-Ausgangsdruck (52) der Hydromaschine (2) und/oder vom Ist-Fördervolumen (40) der Hydromaschine (2) eingestellt werden kann.

4. Druckmittelversorgungsanordnung nach einem der vorhergehenden Ansprüche, wobei eine Anpassung des maximalen Soll-Differentialdrucks (100) derart erfolgt, dass ein maximaler Soll-Differentialdruck (100) für einen Normalbetrieb der Druckmittelversorgungsanordnung vorgesehen ist, und/oder dass ein maximaler Soll-Differentialdruck für einen Feinsteuerbereich eines Verbrauchers, und/oder dass ein maximaler Soll-Differentialdruck in einem Grobsteuerbereich eines Verbrauchers vorgesehen ist.

5. Druckmittelversorgungsanordnung nach einem der vorhergehenden Ansprüche, wobei verschiedene Betriebsmodi einstellbar sind, wobei die jeweiligen Betriebsmodi zumindest einen voreingestellten Parameter und/oder ein voreingestelltes Stellsignal für die Dynamik der Verstellung der Hydromaschine (2) hat und wobei sich die Betriebsmodi hinsichtlich zumindest eines Parameters und/oder hinsichtlich des zumindest einen Stellsignals voneinander unterscheiden.

6. Druckmittelversorgungsanordnung nach Anspruch 5, wobei als Betriebsmodus eine Anpassung des Druckgradienten und/oder des Schwenkwinkelgradienten in Abhängigkeit von dem Verbraucher, der bewegt wird, erfolgen kann, und/oder wobei als Betriebsmodus eine Anpassung des Maximalen Drucks in Abhängigkeit von einer Auslenkung zumindest eines Bedienelements erfolge kann, und/oder wobei als Betriebsmodus eine Anpassung eines Parameters erfolgen kann, wenn eine bestimmte Betriebs- oder Ansteuersituation detektiert wird, und/oder wobei als Betriebsmodus eine Anpassung des Drehmomentlimits in Abhängigkeit von einem Betriebszustand eines Elektroantriebs erfolgen kann.

7. Druckmittelversorgungsanordnung nach einem der vorhergehenden Ansprüche, wobei ein Filter (99, 112, 114, 126, 138) für zumindest eine Eingangsgröße oder ein jeweiliger Filter für einen Teil der Eingangsgrößen oder für alle Eingangsgrößen im zweiten Steuerungsmodul (20) vorgesehen ist.

8. Mobile Arbeitsmaschine mit einer Druckmittelversorgungsanordnung gemäß einem der Ansprüche 1 bis 7.

## Claims

1. Hydraulic pressurizing medium supply assembly having a hydro machine (2) for the supply of pressurizing medium of at least one hydraulic consumer (168, 170, 194, 196, 208), having a hydraulic control block (26) for controlling the at least one consumer (168, 170, 194, 196, 208), and having a first and a second control module (20, 57), wherein the control block (26) by way of the first control module (57) is able to be controlled by at least one actuating signal, wherein a data interface (58) is provided between the control modules (20, 57), and wherein the first control module (57) by way of the data interface (58) is configured for transferring as a second actuating signal to the second control module (20) as input variable/variables a nominal outlet pressure (74) for the hydro machine (2, 186) and/or a nominal delivery volume (70) for the hydro machine (2, 186), wherein the second control module (20) by means of the nominal outlet pressure (74) and/or by means of the nominal delivery volume (70) is configured for controlling an adjusting mechanism (12) of the hydro machine (2) by way of a valve actuating signal (18, 146), and wherein the pressurizing medium supply assembly is configured such that at least one hydraulic parameter (70, 74, 100, 102, 116, 130) is transmitted to the second control module (20) by way of the data interface (58), said hydraulic parameter (70, 74, 100, 102, 116, 130) predefining and/or limiting a dynamic characteristic of the adjusting mechanism (12) of the hydro machine (2), wherein a maximum delivery-volume adjustment rate (130) of the hydro machine (2) and/or a maximum pressure gradient (102) for the actual outlet pressure (52) of the hydro machine (2) and/or a maximum nominal differential pressure (100) for the hydro machine (2) and/or a maximum torque gradient is/are provided as a parameter.

2. Pressurizing medium supply assembly according to Claim 1, wherein a further actuating signal is transmitted to the second control module (20) by way of the data interface (58), said further actuating signal predefining and/or limiting the dynamic characteristic of the adjusting mechanism (12) of the hydro machine (2), wherein a nominal torque (116) as a further actuating signal for the second control module (20) can be supplied by way of the data interface (58).

3. Pressurizing medium supply assembly according to one of the preceding claims, wherein a parameter, or part of the parameters, or all parameters, can be set as a function of a temperature of a pressurizing medium and/or of an actual rotating speed of the hydro machine (2) and/or of the actual outlet pressure (52) of the hydro machine (2) and/or of the actual delivery volume (40) of the hydro machine (2) .

4. Pressurizing medium supply assembly according to one of the preceding claims, wherein adapting the maximum nominal differential pressure (100) takes place in such a manner that a maximum nominal differential pressure (100) is provided for a normal operation of the pressurizing medium supply assembly, and/or that a maximum nominal differential pressure is provided for a precision-control range of a consumer, and/or that a maximum nominal differential pressure is provided in a general control range of a consumer.

5. Pressurizing medium supply assembly according to one of the preceding claims, wherein various operating modes are able to be set, wherein the respective operating modes comprise at least one pre-set parameter and/or one pre-set actuating signal for the dynamic characteristic of the adjustment of the hydro machine (2), and wherein the operating modes differ from one another in terms of at least one parameter and/or in terms of the at least one actuating signal.

6. Pressurizing medium supply assembly according to Claim 5, wherein adapting the pressure gradient and/or the swivel angle gradient as an operating mode can take place as a function of the consumer which is being moved, and/or wherein adapting of the maximum pressure as an operating mode can take place as a function of a deflection of at least one operating element, and/or wherein adapting a parameter as an operating mode can take place when a specific operating or actuating situation is detected, and/or wherein adapting the torque limit as an operating mode can take place as a function of an operating state of an electric drive.

7. Pressurizing medium supply assembly according to one of the preceding claims, wherein a filter (99, 112, 114, 126, 138) is provided for at least one input variable, or a respective filter is provided for part of the input variables or for all input variables in the second control module (20).

8. Mobile work machine having a pressurizing medium supply assembly according to one of Claims 1 to 7.

## Revendications

1. Ensemble d'alimentation en agent sous pression hydraulique comprenant une machine hydraulique (2) destinée alimenter au moins un consommateur hydraulique (168, 170, 194, 196, 208) en agent sous pression, un bloc de commande hydraulique (26) destiné à commander l'au moins un consommateur (168, 170, 194, 196, 208), et un premier et un deuxième module de commande (20, 57), le bloc de commande (26) pouvant être commandé par le biais du premier module de commande (57) sur au moins un premier signal de réglage, une interface de données (58) étant prévue entre les modules de commande (20, 57), et le premier module de commande (57) étant conçu pour transmettre, sous la forme d'un deuxième signal de réglage, une pression de sortie de consigne (74) de la machine hydraulique (2, 186) et/ou un débit de consigne (70) de la machine hydraulique (2, 186) comme grandeur(s) d'entrée au deuxième module de commande (20) par le biais de l'interface de données (58), le deuxième module de commande (20) étant conçu pour commander un mécanisme de réglage (12) de la machine hydraulique (2) avec un signal de réglage de soupape (18, 146) sur la base de la pression de sortie de consigne (74) et/ou sur la base du débit de consigne (70), et l'ensemble d'alimentation en agent sous pression étant conçu de sorte qu'au moins un paramètre hydraulique (70, 74, 100, 102, 116, 130) est transmis au deuxième module de commande (20) par le biais de l'interface de données (58), lequel paramètre spécifie et/ou limite la dynamique du mécanisme de réglage (12) de la machine hydraulique (2), une vitesse de réglage de débit maximale (130) de la machine hydraulique (2) et/ou un gradient de pression maximal (102) pour la pression de sortie réelle (52) de la machine hydraulique (2) et/ou une pression différentielle de consigne maximale (100) pour la machine hydraulique (2) et/ou un gradient de couple maximal étant prévu comme paramètre.

2. Ensemble d'alimentation en agent sous pression selon la revendication 1, un autre signal de réglage, qui spécifie et/ou limite la dynamique du mécanisme de réglage (12) de la machine hydraulique (2), étant transmis au deuxième module de commande (20) par le biais de l'interface de données (58), un couple de consigne (116) pouvant être fourni par le biais de l'interface de données (58) comme autre signal de réglage du deuxième module de commande (20).

3. Ensemble d'alimentation en agent sous pression selon l'une des revendications précédentes, un paramètre ou une partie des paramètres ou tous les paramètres pouvant être réglés en fonction d'une température d'un agent sous pression et/ou d'une vitesse de rotation réelle de la machine hydraulique (2) et/ou de la pression de sortie réelle (52) de la machine hydraulique (2) et/ou du débit réel (40) de la machine hydraulique (2).

4. Ensemble d'alimentation en agent sous pression selon l'une des revendications précédentes, la pression différentielle de consigne maximale (100) est ajustée de manière à prévoir une pression différentielle de consigne maximale (100) pour un fonctionnement normal de l'ensemble d'alimentation en agent sous pression, et/ou une pression différentielle de consigne maximale pour une plage de commande fine d'un consommateur, et/ou une pression différentielle de consigne maximale dans une plage de commande grossière d'un consommateur.

5. Ensemble d'alimentation en agent sous pression selon l'une des revendications précédentes, différents modes de fonctionnement pouvant être réglés, les modes de fonctionnement respectifs ayant au moins un paramètre préréglé et/ou un signal de réglage préréglé pour la dynamique du réglage de la machine hydraulique (2) et les modes de fonctionnement différant les uns des autres en ce qui concerne au moins un paramètre et/ou en ce qui concerne l'au moins un signal de réglage.

6. Ensemble d'alimentation en agent sous pression selon la revendication 5, le gradient de pression et/ou le gradient d'angle de pivotement pouvant être ajustés comme mode de fonctionnement en fonction du consommateur qui est déplacé, et/ou la pression maximale pouvant être ajustée comme mode de fonctionnement en fonction d'une déviation d'au moins un élément de fonctionnement, et/ou un paramètre pouvant être ajusté comme mode de fonctionnement si une situation de fonctionnement ou d'activation déterminée est détectée, et/ou la limite de couple pouvant être ajustée comme mode de fonctionnement en fonction d'un état de fonctionnement d'un entraînement électrique.

7. Ensemble d'alimentation en agent sous pression selon l'une des revendications précédentes, un filtre (99, 112, 114, 126, 138) étant prévu pour au moins une grandeur d'entrée ou un filtre respectif étant prévu pour une partie des grandeurs d'entrée ou pour toutes les grandeurs d'entrée dans le deuxième module de commande (20).

8. Machine de travail mobile comprenant un ensemble d'alimentation en agent sous pression selon l'une des revendications 1 à 7.
